# EUROPEAN PATENT APPLICATION

(11) **EP 4 794 246 A1**
(43) Date of publication of application: **19.08.2026**
(21) Application number: 24884542.2
(22) Date of filing: 23.10.2024
(51) Int. Cl.: H04L 9/00

(54) **COMMUNICATION METHOD AND COMMUNICATION APPARATUS BASED ON POLAR CODE**

(30) Priority: 02.11.2023 CN 202311454153
(71) Applicant: HUAWEI TECHNOLOGIES CO., LTD., Shenzhen 518129 (CN)
(72) Inventor: SUN, Li, Shenzhen, Guangdong 518129 (CN); WANG, Wenhui, Shenzhen, Guangdong 518129 (CN); LIU, Peng, Shenzhen, Guangdong 518129 (CN); CHEN, Lei, Shenzhen, Guangdong 518129 (CN)
(74) Representative: MERH-IP Matias Erny Reichl Hoffmann Patentanwälte PartG mbB
(86) International application number: PCT/CN2024/126725
(87) International publication number: WO 2025/092538

(57) **Abstract**

A polar polar code-based communication method and a communication apparatus are provided. In the method, when encoding a current first to-be-encoded bit block, an encoder side determines a frozen bit for current encoding and encryption based on a second information bit or a second frozen bit associated with a second encoded bit block that is previously transmitted. This implements secure communication based on integrated encoding and encryption, and also improves randomness of the frozen bit, which is not easily obtained by an eavesdropper, thereby helping avoid leakage of the frozen bit, and improving security of encoding and encryption.

## Description

This application claims priority to Chinese Patent Application No. 202311454153.9, filed with the China National Intellectual Property Administration on November 2, 2023 and entitled "POLAR POLAR CODE-BASED COMMUNICATION METHOD AND COMMUNICATION APPARATUS", which is incorporated herein by reference in its entirety.

### TECHNICAL FIELD

This application relates to the field of communication technologies, and in particular, to a polar polar code-based communication method and a communication apparatus.

### BACKGROUND

An existing secure transmission scheme of a communication system depends on key management and higher-layer encryption algorithms. Key management and maintenance require complex communication protocols, which causes extra signaling overheads. In addition, protocol vulnerabilities may be maliciously exploited, which may cause security risks to the communication system. If the higher-layer encryption algorithm is directly used to encrypt physical layer data or signaling, computational complexity is too high and signal processing latency is too long.

An integrated encoding and encryption technology introduces an encryption capability to channel encoding to enhance transmission security without affecting error correction performance. For example, for a polar code, integrated encoding and encryption may be designed, and decoding and decryption need to be performed based on a value of a frozen bit agreed on by two communication parties. If an error occurs in the frozen bit, decoding and decryption cannot be correctly performed. However, if the frozen bit is leaked or is obtained through an exhaustive search, security of all information bits cannot be ensured.

In view of this, how to improve security of physical layer transmission is an urgent problem to be resolved.

### SUMMARY

This application provides a polar polar code-based communication method and a communication apparatus. In the method, a currently transmitted frozen bit may be determined based on at least one of a frozen bit or an information bit that is previously transmitted, or a preset key. This helps avoid leakage of the frozen bit and improve security of physical layer transmission.

According to a first aspect, this application provides a polar polar code-based communication method. The method is performed by a first apparatus, or performed by a component (for example, a processor, a chip, or a chip system) of the first apparatus, or may be performed by a logical module that can implement all or a part of functions of the first apparatus. For example, the first apparatus may be an encoder side (for example, a network device or a terminal), or a component on an encoder side, or a logical module that can implement all or a part of encoding functions. The first apparatus performs polar encoding on a first to-be-encoded bit block, to obtain a first encoded bit block, where the first to-be-encoded bit block includes a first frozen bit, the first frozen bit is determined based on at least one of a second information bit, a second frozen bit, or a preset key, the second information bit or the second frozen bit is associated with a second encoded bit block, and the second encoded bit block is a bit block transmitted before the first encoded bit block. The first apparatus sends the first encoded bit block.

In the method, when encoding the current first to-be-encoded bit block, the encoder side determines the frozen bit for current encoding and encryption based on the second information bit or the second frozen bit associated with the second encoded bit block that is previously transmitted. This implements secure communication based on integrated encoding and encryption, and also improves randomness of the frozen bit, which is not easily obtained by an eavesdropper, thereby helping avoid leakage of the frozen bit, and improving security of encoding and encryption. If the eavesdropper wants to obtain an updated frozen bit, the eavesdropper can only perform an exhaustive search, and computational overheads are very high. Even if the current first frozen bit is obtained by the eavesdropper, the encoder side continues to update the frozen bit in subsequent transmission, and performs encoding and encryption based on a new frozen bit, so the eavesdropper cannot continuously decode data.

In a possible implementation, the first to-be-encoded bit block includes at least one of downlink control information, uplink control information, a bit block transmitted on a physical downlink shared channel, a bit block transmitted on a physical uplink shared channel, a bit block transmitted on a physical downlink control channel, and a bit block transmitted on a physical uplink control channel.

In the method, the first to-be-encoded bit block may be a plurality of different types of information or bit blocks. In other words, the method provided in this application is applicable to a plurality of encoding scenarios, and polar encoding may be performed on the plurality of different types of information or bit blocks.

In a possible implementation, if the first to-be-encoded bit block includes first downlink control information, the second information bit is an information bit transmitted on a physical downlink shared channel or a physical uplink shared channel that is associated with second downlink control information before the first downlink control information; or
if the first to-be-encoded bit block includes first uplink control information, the second information bit is an information bit transmitted on a physical downlink shared channel or a physical uplink shared channel that is associated with second uplink control information before the first uplink control information; or
if the first to-be-encoded bit block includes an information bit transmitted on a first physical downlink shared channel, the second information bit is an information bit transmitted on a second physical downlink shared channel before the first to-be-encoded bit block; or
if the first to-be-encoded bit block includes an information bit transmitted on a first physical uplink shared channel, the second information bit is an information bit transmitted on a second physical uplink shared channel before the first to-be-encoded bit block; or
if the first to-be-encoded bit block includes an information bit transmitted on a first physical downlink control channel, the second information bit is an information bit transmitted on a second physical downlink control channel before the first to-be-encoded bit block; or
if the first to-be-encoded bit block includes an information bit transmitted on a first physical uplink control channel, the second information bit is an information bit transmitted on a second physical uplink control channel before the first to-be-encoded bit block.

In the method, when the first to-be-encoded bit block is information or bit blocks of different types, the second information bit is information or bit blocks of corresponding types in an encoding process.

In a possible implementation, if an acknowledgement for the physical downlink shared channel is received or the physical uplink shared channel is successfully decoded, the first frozen bit is obtained by processing the second frozen bit and the second information bit based on a first function.

In a possible implementation, if an acknowledgement for the physical downlink shared channel is received or the physical uplink shared channel is successfully decoded, the first apparatus processes the second frozen bit and the second information bit based on a first function, to obtain the first frozen bit.

In the method, if the first apparatus receives an acknowledgement (acknowledgement, ACK) for the physical downlink shared channel or successfully decodes the physical uplink shared channel, for example, the first apparatus receives an ACK, the first apparatus may update the frozen bit by using an information bit that has been correctly transmitted before, or process the information bit that has been correctly transmitted before, and update the frozen bit by using a processing result, thereby improving randomness of the frozen bit.

In a possible implementation, if a negative acknowledgement for the physical downlink shared channel is received or the physical uplink shared channel is not successfully decoded, the first frozen bit is obtained by processing at least one of the preset key or the second frozen bit based on a second function.

In a possible implementation, if a negative acknowledgement for the physical downlink shared channel is received or the physical uplink shared channel is not successfully decoded, the first apparatus determines that the first frozen bit is the same as the second frozen bit; or the first apparatus processes at least one of the preset key or the second frozen bit based on a second function, to obtain the first frozen bit.

In the method, if the first apparatus receives a negative acknowledgement (negative acknowledgement, NACK) for the physical downlink shared channel or does not successfully decode the physical uplink shared channel, for example, the first apparatus receives a NACK, the frozen bit may not be updated, or the frozen bit may be updated by using the preset key (or a bit string obtained by processing the preset key), thereby improving randomness of the frozen bit.

In a possible implementation, when a frozen bit update period expires, the first frozen bit is determined based on at least one of the second information bit, the second frozen bit, or the preset key. The second information bit is an information bit in one or more hybrid automatic repeat request (hybrid automatic repeat request, HARQ) processes in the frozen bit update period, and the second frozen bit is a frozen bit in the one or more HARQ processes in the frozen bit update period.

In a possible implementation, when a plurality of encoded bit blocks are respectively transmitted in a plurality of hybrid automatic repeat request HARQ processes, the first apparatus determines frozen bit update periods. When one frozen bit update period expires, the first apparatus determines the first frozen bit based on at least one of the second information bit, the second frozen bit, or the preset key, where the second information bit is an information bit in one or more HARQ processes in the frozen bit update period, and the second frozen bit is a frozen bit in the one or more HARQ processes in the frozen bit update period.

In the method, when a plurality of transport blocks are transmitted in a plurality of HARQ processes, a method similar to a polar code-based frozen bit update method in a single process may also be used. This implements secure communication based on integrated encoding and encryption.

In a possible implementation, the frozen bit update period is a largest time interval in a plurality of time intervals corresponding to the plurality of HARQ processes, or the frozen bit update period is a preset time interval. The time interval is a time interval between a physical downlink shared channel in one of the plurality of HARQ processes and an acknowledgement or a negative acknowledgement for the physical downlink shared channel.

In the method, updating the frozen bit according to the frozen bit update period needs to be considered in the plurality of HARQ processes, to avoid excessively frequent frozen bit updates, and help reduce computational overheads of a system. However, a specific value of the frozen bit update period is not limited. For example, the frozen bit update period may be a largest time interval in a plurality of time intervals corresponding to the plurality of HARQ processes, so that the frozen bit update can be implemented in all the plurality of HARQ processes.

In a possible implementation, if the acknowledgement for the physical downlink shared channel is received in N HARQ processes in the frozen bit update period, the first frozen bit is obtained by processing the second frozen bit and the second information bit in the N HARQ processes based on the first function, and N is a positive integer. Alternatively, the first frozen bit is obtained by processing the second frozen bit and the second information bit in M HARQ processes based on the first function, the M HARQ processes are any M HARQ processes in the N HARQ processes, and M is a positive integer less than or equal to N.

In a possible implementation, if the acknowledgement for the physical downlink shared channel is received in N HARQ processes in the frozen bit update period, the first apparatus processes the second frozen bit and the second information bit in the N HARQ processes based on the first function, to obtain the first frozen bit.

In a possible implementation, the first apparatus processes the second frozen bit and the second information bit in M HARQ processes based on the first function, to obtain the first frozen bit, where the M HARQ processes are any M HARQ processes in the N HARQ processes, and M is a positive integer less than or equal to N.

In the method, if an ACK is received in the N HARQ processes in the plurality of HARQ processes or any M HARQ processes are directly selected, the first frozen bit may be determined based on the second frozen bit and the second information bit in the N HARQ processes or the M HARQ processes. The first frozen bit is used for downlink control information of all subsequent HARQ processes in a current update period until a next frozen bit update period. This helps improve randomness of the frozen bit, and avoids excessively frequent frozen bit updates, thereby helping reduce computational overheads.

In a possible implementation, if the physical uplink shared channel is successfully decoded in at least one HARQ process in the frozen bit update period, the first frozen bit is obtained by processing, based on the first function, the second frozen bit and the second information bit in the at least one HARQ process in which the physical uplink shared channel is successfully decoded.

In a possible implementation, if the physical uplink shared channel is successfully decoded in at least one HARQ process in the frozen bit update period, the first apparatus processes, based on the first function, the second frozen bit and the second information bit in the at least one HARQ process in which the physical uplink shared channel is successfully decoded, to obtain the first frozen bit.

In the method, if the physical uplink shared channel is successfully decoded in the at least one HARQ process in the plurality of HARQ processes, the first frozen bit may be determined based on the second frozen bit and the second information bit in the HARQ process. The first frozen bit is used for downlink control information in all subsequent HARQ processes until a next frozen bit update period. This helps improve randomness of the frozen bit.

In a possible implementation, the first function or the second function includes a combination of one or more of hash, truncation, concatenation, sampling, and symmetric encryption.

In the method, a possible implementation of the first function or the second function is described as an example, for example, a combination of implementations such as hash and truncation. This helps improve security.

According to a second aspect, this application provides a polar polar code-based communication method. The method is performed by a second apparatus, or performed by a component (for example, a processor, a chip, or a chip system) of the second apparatus, or may be performed by a logical module that can implement all or a part of functions of the second apparatus. For example, the second apparatus may be a decoder side (for example, a network device or a terminal), or a component on a decoder side, or a logical module that can implement all or a part of decoding functions. The second apparatus receives a first encoded bit block. The second apparatus performs polar decoding on the first encoded bit block based on a first frozen bit, to obtain a first to-be-encoded bit block. The first frozen bit is determined based on at least one of a second information bit, a second frozen bit, or a preset key, the second information bit or the second frozen bit is associated with a second encoded bit block, and the second encoded bit block is a bit block transmitted before the first encoded bit block.

In the method, when decoding the currently received encoded bit block, the decoder side determines the first frozen bit based on the second information bit and the second frozen bit in a previous decoding result, and performs decoding based on the first frozen bit, thereby implementing secure communication based on integrated decoding and decryption.

In a possible implementation, the first to-be-encoded bit block includes at least one of downlink control information, uplink control information, a bit block transmitted on a physical downlink shared channel, a bit block transmitted on a physical uplink shared channel, a bit block transmitted on a physical downlink control channel, and a bit block transmitted on a physical uplink control channel.

In the method, the first to-be-encoded bit block may be a plurality of different types of information or bit blocks. In other words, the method provided in this application is applicable to a plurality of encoding scenarios, and polar encoding may be performed on the plurality of different types of information or bit blocks.

In a possible implementation, if the first to-be-encoded bit block includes first downlink control information, the second information bit is an information bit transmitted on a physical downlink shared channel or a physical uplink shared channel that is associated with second downlink control information before the first downlink control information; or
if the first to-be-encoded bit block includes first uplink control information, the second information bit is an information bit transmitted on a physical downlink shared channel or a physical uplink shared channel that is associated with second uplink control information before the first uplink control information; or
if the first to-be-encoded bit block includes an information bit transmitted on a first physical downlink shared channel, the second information bit is an information bit transmitted on a second physical downlink shared channel before the first to-be-encoded bit block; or
if the first to-be-encoded bit block includes an information bit transmitted on a first physical uplink shared channel, the second information bit is an information bit transmitted on a second physical uplink shared channel before the first to-be-encoded bit block; or
if the first to-be-encoded bit block includes an information bit transmitted on a first physical downlink control channel, the second information bit is an information bit transmitted on a second physical downlink control channel before the first to-be-encoded bit block; or
if the first to-be-encoded bit block includes an information bit transmitted on a first physical uplink control channel, the second information bit is an information bit transmitted on a second physical uplink control channel before the first to-be-encoded bit block.

In the method, when the first to-be-encoded bit block is information or bit blocks of different types, the second information bit is information or bit blocks of corresponding types in an encoding process.

In a possible implementation, the first frozen bit is obtained by processing the second information bit and the second frozen bit based on a first function; or the first frozen bit is obtained by processing at least one of the preset key or the second frozen bit based on a second function.

In the method, the decoder side determines the first frozen bit based on the second information bit and the second frozen bit in the previous decoding result, or determines the first frozen bit based on the preset key or the second frozen bit, to implement decoding and decryption based on the first frozen bit, to obtain the information bit.

According to a third aspect, this application provides a polar polar code-based communication method. The method is implemented through interaction between a first apparatus and a second apparatus. For example, the first apparatus is an encoder side, and the second apparatus is a decoder side. The communication method includes the following steps: The first apparatus performs polar encoding on a first to-be-encoded bit block, to obtain a first encoded bit block, where the first to-be-encoded bit block includes a first frozen bit, the first frozen bit is determined based on at least one of a second information bit, a second frozen bit, or a preset key, the second information bit or the second frozen bit is associated with a second encoded bit block, and the second encoded bit block is a bit block transmitted before the first encoded bit block. The first apparatus sends the first encoded bit block. Correspondingly, the second apparatus receives the first encoded bit block. The second apparatus performs polar decoding on the first encoded bit block based on a first frozen bit, to obtain a first to-be-encoded bit block.

In the method, when encoding the current first to-be-encoded bit block, the encoder side determines the frozen bit for current encoding and encryption based on the second information bit or the second frozen bit associated with the second encoded bit block that is previously transmitted. This implements secure communication based on integrated encoding and encryption, and also improves randomness of the frozen bit, which is not easily obtained by an eavesdropper, thereby helping avoid leakage of the frozen bit, and improving security of encoding and encryption. When decoding the currently received encoded bit block, the decoder side determines the first frozen bit based on the second information bit and the second frozen bit in a previous decoding result, and performs decoding based on the first frozen bit, thereby implementing secure communication based on integrated decoding and decryption.

Optionally, for another implementation of the communication method, refer to corresponding descriptions in the first aspect and the second aspect. Details are not described herein again.

According to a fourth aspect, this application provides a communication apparatus. The communication apparatus may implement an encoding function, for example, may be a network device, or may be an apparatus of a network device, or may be an apparatus that can be used with a network device in a matching manner; or may be a terminal, or may be an apparatus of a terminal, or may be an apparatus that can be used with a terminal in a matching manner. In a possible implementation, the communication apparatus may include a functional module. The functional module may be implemented by a hardware circuit, software, or a combination of a hardware circuit and software.

In a possible implementation, the communication apparatus includes a communication unit and a processing unit. The processing unit is configured to perform polar encoding on a first to-be-encoded bit block, to obtain a first encoded bit block, where the first to-be-encoded bit block includes a first frozen bit, the first frozen bit is determined based on at least one of a second information bit, a second frozen bit, or a preset key, the second information bit or the second frozen bit is associated with a second encoded bit block, and the second encoded bit block is a bit block transmitted before the first encoded bit block. The communication unit is configured to send the first encoded bit block.

In a possible implementation, the first to-be-encoded bit block includes at least one of downlink control information, uplink control information, a bit block transmitted on a physical downlink shared channel, a bit block transmitted on a physical uplink shared channel, a bit block transmitted on a physical downlink control channel, and a bit block transmitted on a physical uplink control channel.

In a possible implementation, if the first to-be-encoded bit block includes first downlink control information, the second information bit is an information bit transmitted on a physical downlink shared channel or a physical uplink shared channel that is associated with second downlink control information before the first downlink control information; or
if the first to-be-encoded bit block includes first uplink control information, the second information bit is an information bit transmitted on a physical downlink shared channel or a physical uplink shared channel that is associated with second uplink control information before the first uplink control information; or
if the first to-be-encoded bit block includes an information bit transmitted on a first physical downlink shared channel, the second information bit is an information bit transmitted on a second physical downlink shared channel before the first to-be-encoded bit block; or
if the first to-be-encoded bit block includes an information bit transmitted on a first physical uplink shared channel, the second information bit is an information bit transmitted on a second physical uplink shared channel before the first to-be-encoded bit block; or
if the first to-be-encoded bit block includes an information bit transmitted on a first physical downlink control channel, the second information bit is an information bit transmitted on a second physical downlink control channel before the first to-be-encoded bit block; or
if the first to-be-encoded bit block includes an information bit transmitted on a first physical uplink control channel, the second information bit is an information bit transmitted on a second physical uplink control channel before the first to-be-encoded bit block.

In a possible implementation, if an acknowledgement for the physical downlink shared channel is received or the physical uplink shared channel is successfully decoded, the first frozen bit is obtained by processing the second frozen bit and the second information bit based on a first function.

In a possible implementation, if an acknowledgement for the physical downlink shared channel is received or the physical uplink shared channel is successfully decoded, the processing unit is configured to process the second frozen bit and the second information bit based on a first function, to obtain the first frozen bit.

In a possible implementation, if a negative acknowledgement for the physical downlink shared channel is received or the physical uplink shared channel is not successfully decoded, the first frozen bit is obtained by processing at least one of the preset key or the second frozen bit based on a second function.

In a possible implementation, if a negative acknowledgement for the physical downlink shared channel is received or the physical uplink shared channel is not successfully decoded, the processing unit is configured to determine that the first frozen bit is the same as the second frozen bit; or the processing unit is configured to process at least one of the preset key or the second frozen bit based on a second function, to obtain the first frozen bit.

In a possible implementation, when a frozen bit update period expires, the first frozen bit is determined based on at least one of the second information bit, the second frozen bit, or the preset key. The second information bit is an information bit in one or more HARQ processes in the frozen bit update period, and the second frozen bit is a frozen bit in the one or more HARQ processes in the frozen bit update period.

In a possible implementation, when a plurality of encoded bit blocks are respectively transmitted in a plurality of hybrid automatic repeat request HARQ processes, the processing unit is configured to determine frozen bit update periods. When one frozen bit update period expires, the processing unit is configured to determine the first frozen bit based on at least one of the second information bit, the second frozen bit, or the preset key, where the second information bit is an information bit in one or more HARQ processes in the frozen bit update period, and the second frozen bit is a frozen bit in the one or more HARQ processes in the frozen bit update period.

In a possible implementation, the frozen bit update period is a largest time interval in a plurality of time intervals corresponding to the plurality of HARQ processes, or the frozen bit update period is a preset time interval. The time interval is a time interval between a physical downlink shared channel in one of the plurality of HARQ processes and an acknowledgement or a negative acknowledgement for the physical downlink shared channel.

In a possible implementation, if the acknowledgement for the physical downlink shared channel is received in N HARQ processes in the frozen bit update period, the first frozen bit is obtained by processing the second frozen bit and the second information bit in the N HARQ processes based on the first function, and N is a positive integer. Alternatively, the first frozen bit is obtained by processing the second frozen bit and the second information bit in M HARQ processes based on the first function, the M HARQ processes are any M HARQ processes in the N HARQ processes, and M is a positive integer less than or equal to N.

In a possible implementation, if the acknowledgement for the physical downlink shared channel is received in N HARQ processes in the frozen bit update period, the processing unit is configured to process the second frozen bit and the second information bit in the N HARQ processes based on the first function, to obtain the first frozen bit.

In a possible implementation, the processing unit is configured to process the second frozen bit and the second information bit in M HARQ processes based on the first function, to obtain the first frozen bit, where the M HARQ processes are any M HARQ processes in the N HARQ processes, and M is a positive integer less than or equal to N.

In a possible implementation, if the physical uplink shared channel is successfully decoded in at least one HARQ process in the frozen bit update period, the first frozen bit is obtained by processing, based on the first function, the second frozen bit and the second information bit in the at least one HARQ process in which the physical uplink shared channel is successfully decoded.

In a possible implementation, if the physical uplink shared channel is successfully decoded in at least one HARQ process in the frozen bit update period, the processing unit is configured to process, based on the first function, the second frozen bit and the second information bit in the at least one HARQ process in which the physical uplink shared channel is successfully decoded, to obtain the first frozen bit.

In a possible implementation, the first function or the second function includes a combination of one or more of hash, truncation, concatenation, sampling, and symmetric encryption.

According to a fifth aspect, this application provides a communication apparatus. The communication apparatus may implement a decoding function, for example, may be a network device, or may be an apparatus of a network device, or may be an apparatus that can be used with a network device in a matching manner; or may be a terminal, or may be an apparatus of a terminal, or may be an apparatus that can be used with a terminal in a matching manner. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to receive a first encoded bit block. The processing unit is configured to perform polar decoding on the first encoded bit block based on a first frozen bit, to obtain a first to-be-encoded bit block. The first frozen bit is determined based on at least one of a second information bit, a second frozen bit, or a preset key, the second information bit or the second frozen bit is associated with a second encoded bit block, and the second encoded bit block is a bit block transmitted before the first encoded bit block.

In a possible implementation, the first to-be-encoded bit block includes at least one of downlink control information, uplink control information, a bit block transmitted on a physical downlink shared channel, a bit block transmitted on a physical uplink shared channel, a bit block transmitted on a physical downlink control channel, and a bit block transmitted on a physical uplink control channel.

In a possible implementation, if the first to-be-encoded bit block includes first downlink control information, the second information bit is an information bit transmitted on a physical downlink shared channel or a physical uplink shared channel that is associated with second downlink control information before the first downlink control information; or
if the first to-be-encoded bit block includes first uplink control information, the second information bit is an information bit transmitted on a physical downlink shared channel or a physical uplink shared channel that is associated with second uplink control information before the first uplink control information; or
if the first to-be-encoded bit block includes an information bit transmitted on a first physical downlink shared channel, the second information bit is an information bit transmitted on a second physical downlink shared channel before the first to-be-encoded bit block; or
if the first to-be-encoded bit block includes an information bit transmitted on a first physical uplink shared channel, the second information bit is an information bit transmitted on a second physical uplink shared channel before the first to-be-encoded bit block; or
if the first to-be-encoded bit block includes an information bit transmitted on a first physical downlink control channel, the second information bit is an information bit transmitted on a second physical downlink control channel before the first to-be-encoded bit block; or
if the first to-be-encoded bit block includes an information bit transmitted on a first physical uplink control channel, the second information bit is an information bit transmitted on a second physical uplink control channel before the first to-be-encoded bit block.

In a possible implementation, the first frozen bit is obtained by processing the second information bit and the second frozen bit based on a first function; or the first frozen bit is obtained by processing at least one of the preset key or the second frozen bit based on a second function.

According to a sixth aspect, this application provides a communication apparatus, including a processor configured to enable, by using a logic circuit and/or executing instructions, the communication apparatus to implement the method according to any one of the first aspect, the second aspect, and the possible implementations of the first aspect and the second aspect. Optionally, the communication apparatus further includes a memory. The memory is configured to store the instructions. When the instructions are executed by the processor, the communication apparatus is enabled to implement the method according to any one of the first aspect, the second aspect, and the possible implementations of the first aspect and the second aspect. Optionally, the processor is coupled to the memory.

According to a seventh aspect, this application provides a communication system. The communication system includes a plurality of the apparatuses or devices according to the third aspect to the fifth aspect. The apparatuses or devices are enabled to perform the method according to any one of the first aspect, the second aspect, and the possible implementations of the first aspect and the second aspect.

According to an eighth aspect, this application provides a computer-readable storage medium. The computer-readable storage medium stores instructions. When the instructions are run on a computer, the computer is enabled to perform the method according to any one of the first aspect, the second aspect, and the possible implementations of the first aspect and the second aspect.

According to a ninth aspect, this application provides a computer program product, including instructions. When the instructions are run on a computer, the computer is enabled to perform the method according to any one of the first aspect, the second aspect, and the possible implementations of the first aspect and the second aspect.

According to a tenth aspect, this application provides a chip, and the chip includes a processor (or a logic circuit). Optionally, the chip may further include a communication interface (or an interface), configured to implement the method according to any one of the first aspect, the second aspect, and the possible implementations of the first aspect and the second aspect. In a possible implementation, if the chip is the smallest processing unit in an entire system, the chip may be a processor, or may include a processor and a memory, or may include a processor, a memory, and a transceiver, configured to implement the method according to any one of the first aspect, the second aspect, and the possible implementations of the first aspect and the second aspect.

According to an eleventh aspect, this application provides a chip system. The chip system includes a processor and an interface. Optionally, the chip system may further include a memory, configured to implement the method according to any one of the first aspect, the second aspect, and the possible implementations of the first aspect and the second aspect. The chip system may include a chip, or may include a chip and another discrete component.

### BRIEF DESCRIPTION OF DRAWINGS

FIG. 1 is a diagram of a communication system according to this application;
FIG. 2 is a diagram of an integrated encoding and encryption technical solution designed by using a channel quality advantage of a legitimate channel over an eavesdropping channel;
FIG. 3 is a diagram of a frozen bit-based integrated encoding and encryption technology;
FIG. 4 is a schematic flowchart of a polar polar code-based communication method according to this application;
FIG. 5 is a schematic flowchart of a specific implementation of a polar polar code-based communication method according to this application;
FIG. 6 is a diagram of a PDSCH-based frozen bit update according to this application;
FIG. 7 is a diagram of a PUSCH-based frozen bit update according to this application;
FIG. 8 is a diagram of a polar polar code-based communication method applied to a multi-HARQ-process transmission scenario according to this application;
FIG. 9 is a diagram of a communication apparatus according to this application; and
FIG. 10 is a diagram of another communication apparatus according to this application.

### DESCRIPTION OF EMBODIMENTS

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing technical solutions in embodiments of this application, words such as "first" and "second" may be used to distinguish technical features with a same or similar function in embodiments of this application. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

The following describes technical solutions in embodiments of this application with reference to accompanying drawings in embodiments of this application.

To improve security of integrated encoding and encryption, this application provides a polar polar code-based communication method and a communication apparatus. According to the communication method, a frozen bit may be periodically or aperiodically updated, to avoid leakage of the frozen bit or obtaining of the frozen bit through an exhaustive search, thereby improving security of integrated encoding and encryption.

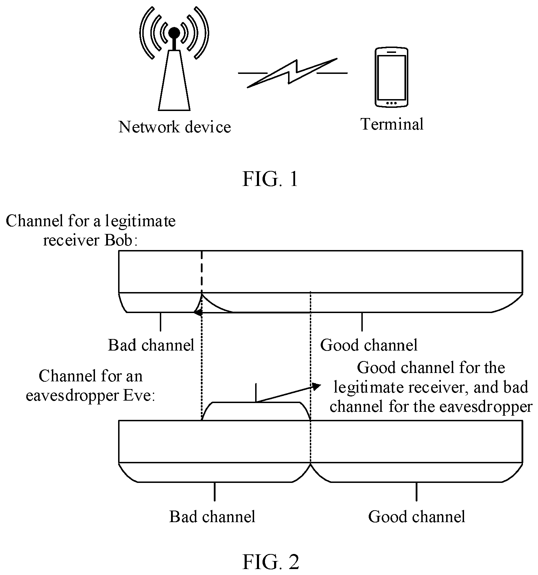

The polar polar code-based communication method provided in this application may be applied to a communication system shown in FIG. 1. For example, the communication system includes a network device and a terminal. In FIG. 1, an example in which there is only one network device and one terminal is used for description. A quantity of the devices is not limited in this application. The network device may implement encoding and encryption functions or decoding and decryption functions, and may be referred to as an encoder side (an encoding and encryption end) or a decoder side (a decoding and decryption end). The terminal may also implement encoding and encryption functions or decoding and decryption functions, and may also be referred to as an encoder side (an encoding and encryption end) or a decoder side (a decoding and decryption end). For example, when the network device is an encoding and encryption end, the terminal is a decoding and decryption end; or when the terminal is an encoding and encryption end, the network device is a decoding and decryption end; or when the terminal is an encoding and encryption end, another terminal is a decoding and decryption end.

The communication system in this application may include but is not limited to a communication system using various radio access technologies (radio access technology, RAT), for example, may be a new radio (new radio, NR) system, or may be another communication system, for example, a next generation (6G) communication system that is evolved after NR, provided that there are two entities in the communication system, and one entity may send information to the other entity or receive information sent by the other entity. The information herein may be a physical signal, for example, a preamble or a reference signal; physical layer control information, for example, downlink control information (downlink control information, DCI) and uplink control information (uplink control information, UCI); control plane (control plane, CP) data, for example, a radio resource control (radio resource control, RRC) message; and user plane (user plane, UP) data. Optionally, the information may further be information related to another specific scenario or application, for example, related data (such as gradient information, training data, and model parameters) generated by enabling or by artificial intelligence (artificial intelligence, AI) or machine learning (machine learning, ML), or related data generated by enabling a sensing function or by sensing.

The terminal, also referred to as a terminal (terminal) device, user equipment (user equipment, UE), a mobile station (mobile station, MS), a mobile terminal (mobile terminal, MT), or the like, is a device that provides voice and/or data connectivity for a user, or may be an internet of things device. For example, the terminal includes a handheld device or a vehicle-mounted device that has a wireless connection function. Currently, some examples of the terminal are: a mobile phone (mobile phone), a tablet computer, a notebook computer, a palmtop computer, a mobile internet device (mobile internet device, MID), a wearable device (for example, a smart watch, a smart band, a pedometer, or smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), a terminal in a future evolved network, a terminal in a future communication system, or the like. Alternatively, the terminal device may be a vehicle apparatus, for example, an entire vehicle apparatus, a vehicle-mounted module, a vehicle-mounted chip, an on board unit (on board unit, OBU), or a telematics box (telematics box, T-BOX). Alternatively, the terminal device may be another device that has a terminal function. For example, the terminal device may be a device that functions as a terminal in device to device (device to device, D2D) communication.

The network device in this application is a radio access network (radio access network, RAN) node (or device) that connects a terminal to a wireless network, and may also be referred to as an access network device or a RAN node (or device). In a possible scenario, the network device may include a base station (base station), a transmission reception point (transmission reception point, TRP), an evolved NodeB (evolved NodeB, eNB), a transmission point (transmitting point, TP), a next-generation NodeB (next-generation NodeB, gNB), a next-generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station, a micro base station, an indoor base station, a relay node, a donor node, or a radio controller in a cloud-radio access network (cloud-radio access network, CRAN) scenario. Alternatively, the network device may be a device that functions as a base station in D2D communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist a terminal in implementing radio access, and different network devices separately implement a part of functions of the base station. For example, the network device may include a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It should be noted that:
"Sending" and "receiving" in embodiments of this application represent signal transfer directions. For example, "sending information to a terminal" may be understood as a destination end of the information being the terminal device, and may include direct sending through an air interface, or indirect sending by another unit or module through an air interface. "Receiving information from a network device" may be understood as a source end of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that corresponding processing, such as encoding and modulation, may be performed on the information between the source end at which the information is sent and the destination end, but the destination end may understand valid information from the source end. Similar expressions in this application may be understood similarly. Details are not described again.

In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and a remaining part of the to-be-indicated information is known or pre-agreed on. For example, specific information may alternatively be indicated by using an arrangement sequence of pieces of information that is pre-agreed on (for example, predefined in a protocol), to reduce indication overheads to a specific extent. A specific indication manner is not limited in this application. It may be understood that, for a transmitter of the indication information, the indication information may indicate the to-be-indicated information, and for a receiver of the indication information, the indication information may be used for determining the to-be-indicated information.
I. For ease of understanding, the following describes in detail definitions of related nouns in this application.

### 1. Integrated encoding and encryption technology

An existing secure transmission scheme of a communication system depends on key management and higher-layer encryption algorithms. However, key management and maintenance require complex communication protocols, which causes extra signaling overheads. In addition, protocol vulnerabilities may be exploited by an attacker, which may cause security risks to the communication system. In addition, if the higher-layer encryption algorithm is directly used to encrypt physical layer data or signaling, computational complexity is too high and signal processing latency is too long.

The integrated encoding and encryption technology introduces an encryption capability to channel encoding to enhance transmission security without affecting error correction performance. On the one hand, integration of encryption and encoding can reduce overheads and reduce processing latency caused by excessive processing at multiple protocol layers. On the other hand, lower-layer control signaling is vulnerable to eavesdropping due to lack of an encryption mechanism. However, the integrated encoding and encryption technology can provide security assurance for the lower-layer control signaling.

### 2. Integrated encoding and encryption technology designed based on a channel

A polar code has a special encoding structure, and is suitable for combination with encryption. In addition, the polar code is used for a control channel, and it is also practical to perform an integrated encoding and encryption operation on the polar code. Therefore, currently, most integrated encoding and encryption technical solutions are based on the polar code. For example, FIG. 2 is a diagram of an integrated encoding and encryption technical solution designed by using a channel quality advantage of a legitimate channel over an eavesdropping channel. A legitimate transmitter Alice performs polar encoding on a to-be-sent information bit, and sends the to-be-sent information bit to a legitimate receiver Bob. According to a channel polarization principle, equivalent channel quality experienced by information bits to be sent by the legitimate transmitter may be different, and equivalent channels experienced by the bits may be classified into two types: a "good channel" and a "bad channel", as shown in FIG. 2. It is assumed that channel polarization is ideal. A bit transmitted on the good channel is not erroneous during transmission, while a bit transmitted on the bad channel may be erroneous during transmission. If channel quality from the transmit end Alice to an eavesdropper Eve is poorer than channel quality from Alice to the receive end Bob (that is, a legitimate link has a channel quality advantage), a quantity of "good channels" polarized from an Alice-to-Eve channel is less than a quantity of "good channels" polarized from an Alice-to-Bob channel, as shown in FIG. 2. Therefore, for some bits, the Alice-to-Bob channel they experience is a "good channel", while the Alice-to-Eve channel they experience is a "bad channel". If bits carrying useful information are sent on these equivalent channels, these bits can only be correctly received by Bob, but cannot be received by Eve. In this way, confidentiality is achieved. For equivalent bit channels that are "good channels" for Bob and Eve, random bits are sent, that is, no information is carried. In this way, even if these bits are received by Eve, no useful information is leaked. For the polarized "bad channel" in the Bob channel, frozen bits are sent, and neither Bob nor Eve may correctly receive these bits.

However, the method is based on that the legitimate channel has a channel quality advantage (for example, a higher received signal-to-noise ratio) over the eavesdropping channel, and it is assumed that the transmit end knows channel state information (channel state information, CSI) of the eavesdropping channel. The assumption is difficult to be met in practice. In addition, the method may cause an additional rate loss.

### 3. Frozen bit-based integrated encoding and encryption technology

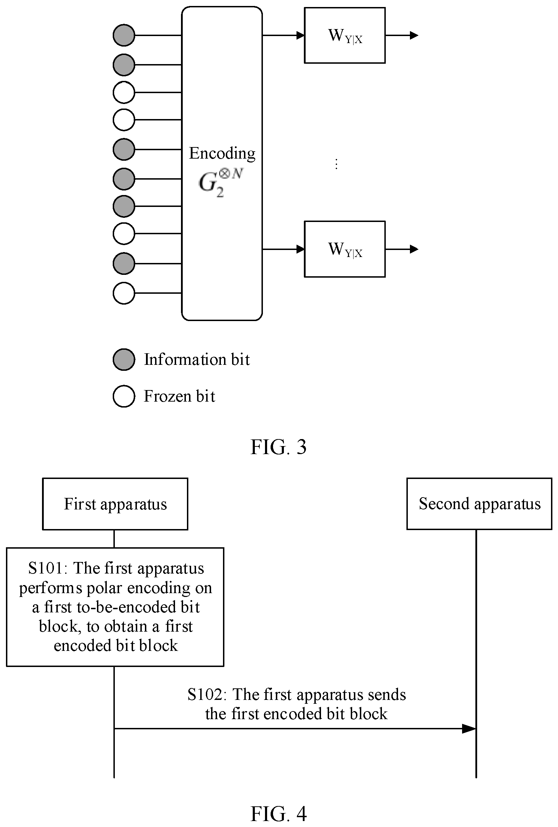

A polar code needs to be decoded based on a value of a frozen bit agreed on by two communication parties. If an error occurs in the frozen bit, the polar code cannot be correctly decoded. For example, FIG. 3 is a diagram of a frozen bit-based integrated encoding and encryption technology. An encoder side uses a preset key as a frozen bit for polar code encoding, or processes the frozen bit by using a key (for example, exclusive OR, encryption, or another scrambling/coding manner). After such processing, an eavesdropper cannot know the frozen bit, and therefore cannot correctly decode the frozen bit. However, if the frozen bit remains unchanged for a long time (for example, a key is directly used as the frozen bit) or the frozen bit is generated based on a fixed preset key, once the key is leaked or is obtained through an exhaustive search, security of all information bits cannot be ensured.

In view of this, this application provides a polar polar code-based communication method and a communication apparatus. In the method, a currently transmitted frozen bit may be determined based on at least one of a frozen bit or an information bit that is previously transmitted, or a preset key. This helps avoid leakage of the frozen bit and improve security of physical layer transmission.

### II. Polar polar code-based communication method according to this application

For example, FIG. 4 is a schematic flowchart of a polar polar code-based communication method according to this application. The method may be implemented through interaction between a first apparatus and a second apparatus. The first apparatus is an apparatus (for example, a terminal or a network device) for implementing encoding and encryption functions, and the second apparatus is an apparatus (for example, a network device or a terminal) for implementing decoding and decryption functions.

S101: The first apparatus performs polar encoding on a first to-be-encoded bit block, to obtain a first encoded bit block.

The first to-be-encoded bit block includes a first frozen bit, and the first frozen bit is used to perform integrated encoding and encryption on the first to-be-encoded bit block. For example, it is assumed that in the first to-be-encoded bit block, a to-be-encoded information bit is represented as *mₖ*, and the first frozen bit is represented as *fₖ*. It is assumed that the first encoded bit block is represented as *dₖ*, the first apparatus may perform polar encoding to obtain *dₖ* = ECC(*mₖ,fₖ*), where ECC(*x,y*) represents a polar encoding operation.

Optionally, the first to-be-encoded bit block includes at least one of downlink control information, uplink control information, a bit block transmitted on a physical downlink shared channel (physical downlink shared channel, PDSCH), a bit block transmitted on a physical uplink shared channel (physical uplink shared channel, PUSCH), a bit block transmitted on a physical downlink control channel (physical downlink control channel, PDCCH), and a bit block transmitted on a physical uplink control channel (physical uplink control channel, PUCCH). That the first to-be-encoded bit block is a bit block in an uplink transmission scenario or a bit block in a downlink transmission scenario is not limited in this application. The downlink control information may be DCI, or may be another possible name for downlink control information in a subsequent evolved protocol. This is not limited in this application. Similarly, the uplink control information may be UCI, or another possible name for downlink control information in a subsequent evolved protocol, or the like. For example, it is assumed that the first to-be-encoded bit block is downlink control information, the downlink control information carries the to-be-encoded information bit *mₖ*, and the first apparatus performs, based on the first frozen bit, polar encoding on the to-be-encoded information bit carried in the downlink control information, to obtain the first encoded bit block *dₖ* = ECC(*mₖ*,*fₖ*). In other words, information carried in the downlink control information, uplink control information, bit block transmitted on a physical downlink shared channel, bit block transmitted on a physical uplink shared channel, bit block transmitted on a physical downlink control channel, or bit block transmitted on the physical uplink control channel includes the to-be-encoded information bit.

The first frozen bit is determined based on at least one of a second information bit, a second frozen bit, or a preset key, and the second information bit or the second frozen bit is associated with a second encoded bit block. The second encoded bit block is a bit block transmitted before the first encoded bit block. For example, the second encoded bit block is a bit block transmitted before the first encoded bit block, indicating that the first apparatus first generates and sends the second encoded bit block, and then generates and sends the first encoded bit block. The second encoded bit block is obtained by performing polar encoding on a second to-be-encoded bit block. For example, it is assumed that the second encoded bit block is represented as *d*_{*k*-1}. In the second to-be-encoded bit block, a to-be-encoded information bit is represented as *m*_{*k*-1}, and the second frozen bit is represented as *f*_{*k*-1}. In this case, the first apparatus may perform polar encoding to obtain *d*_{*k*-1} = ECC(*m*_{*k*-1},*f*_{*k*-1}). The preset key is a key that is used for encryption/decryption and that is known to both an encoder side and a decoder side. For example, the preset key may be represented as key, and includes but is not limited to various types of encryption/decryption keys in cryptography. This is not limited in this application.

Optionally, if an acknowledgement for the physical downlink shared channel is received or the physical uplink shared channel is successfully decoded, the first frozen bit is obtained by processing the second frozen bit and the second information bit based on a first function. For example, if an acknowledgement for the physical downlink shared channel is received or the physical uplink shared channel is successfully decoded, it indicates that a previously transmitted PDSCH is successfully decoded by a receive end or a previously transmitted PUSCH is successfully decoded by a transmit end. In this case, an encoder side may update, by using an information bit in the previously transmitted PDSCH associated with the second encoded bit block or an information bit in the previously transmitted PUSCH associated with the second encoded bit block, a frozen bit used for current polar encoding. For example, it is assumed that a previously transmitted PDSCH is successfully decoded by the receive end, the second information bit is an information bit in the previously transmitted PDSCH, the second information bit is represented as *i*_{*k*-1}, and the second frozen bit is represented as *f*_{*k*-1}. In this case, the first frozen bit is represented as *fₖ* = *g*₁(*f*_{*k*-1,}*i*_{*k*-1}), where *g*₁ represents the first function for generating the frozen bit, and a specific implementation of the first function is described in detail in a subsequent embodiment. Optionally, the second information bit is all or a part of information bits in the previously transmitted PDSCH, or the second information bit is all or a part of information bits in the previously transmitted PUSCH. Similarly, it is assumed that the frozen bit is also updated in a subsequent transmission process by using a similar method. For example, it is assumed that a currently transmitted PDSCH is successfully decoded by the receive end, an information bit in a PDSCH associated with a currently transmitted encoded bit block is represented as *iₖ*, and a frozen bit in a currently transmitted to-be-encoded bit block is represented as *fₖ*. In this case, a frozen bit used for next encryption (that is, an updated frozen bit) is represented as *f*_{*k*+1} = *g*₁(*f_{k,}iₖ*). It can be learned that, in this application, the frozen bit used for current polar encoding may be updated by using the previously transmitted information bit. This implements secure communication based on integrated encoding and encryption.

Optionally, if a negative acknowledgement for the physical downlink shared channel is received or the physical uplink shared channel is not successfully decoded, the first frozen bit is obtained by processing at least one of the preset key or the first frozen bit based on a second function. For example, if a negative acknowledgement for the physical downlink shared channel is received or the physical uplink shared channel is not successfully decoded, it indicates that a previously transmitted PDSCH is not successfully decoded by the receive end or a previously transmitted PUSCH is not successfully decoded by the transmit end. In this case, the encoder side may select not to update the frozen bit currently, or generate the first frozen bit based on the preset key. For example, it is assumed that the second frozen bit is represented as *f*_{*k*-1}, and the first frozen bit is represented as *fₖ* = *f*_{*k*-1}. In other words, the frozen bit is not updated in the current transmission, and the information bit is still encoded and encrypted based on *f*_{*k*-1}. Optionally, the second frozen bit is all or a part of frozen bits used in previous polar encoding. For another example, the first frozen bit is represented as *fₖ* = *g*₂(*key*), and *g*₂ represents the second function for generating the frozen bit. A specific implementation of the second function is described in detail in a subsequent embodiment, and key represents the preset key.

S102: The first apparatus sends the first encoded bit block. Correspondingly, the second apparatus receives the first encoded bit block.

The first apparatus is the encoder side, and may send the first encoded bit block to a decoder side. For example, it is assumed that the first encoded bit block includes DCI. In this case, that the first apparatus sends the first encoded bit block indicates that a base station sends the DCI to the terminal. Correspondingly, the terminal receives the DCI.

Optionally, that the first apparatus sends the first encoded bit block actually means performing a procedure, for example, modulation, and then transmitting the first encoded bit block through a channel. Correspondingly, that the second apparatus receives the first encoded bit block actually means receiving an encoded bit block obtained after the first encoded bit block is transmitted through the channel and demodulated. The encoded bit block may be not identical with the first encoded bit block, but carries a same information bit as the first encoded bit block.

Optionally, after receiving the first encoded bit block, the second apparatus may perform polar decoding on the first encoded bit block based on the first frozen bit, to obtain the first to-be-encoded bit block. Optionally, for the decoder side, if a generation rule of the first frozen bit is unknown to the decoder side, the decoder side may assume that the generation rule of the first frozen bit is *fₖ* = *g*₁(*f*_{*k*-1},*i*_{*k*-1}), *fₖ* = *f*_{*k*-1}, or *fₖ* = *g*₂(*key*), and generate a plurality of first frozen bits according to the rule, then separately perform decoding attempts based on the plurality of possible first frozen bits, and determine, based on whether cyclic redundancy check (cyclic redundancy check, CRC) succeeds, which assumption is correct. In this way, the first to-be-encoded bit block can be finally obtained, that is, a currently transmitted information bit is obtained. Optionally, if a generation rule of the first frozen bit is known to the decoder side, the decoder side may obtain the first frozen bit according to the generation rule, and perform decoding based on the first frozen bit to obtain the first to-be-encoded bit block (including a currently transmitted information bit). Optionally, that the generation rule of the first frozen bit is unknown to the decoder side includes the following case. For example, it is assumed that, for the encoder side, the generation rule of the first frozen bit is updating the first frozen bit based on a PUSCH associated with the DCI. Because the base station does not feed back indication information similar to the ACK or the NACK to the terminal, the terminal does not know whether the base station correctly decodes the PUSCH, and cannot determine a manner in which the first frozen bit is generated (*fₖ = g*₁*(f*_{*k*-1},*i*_{*k*-1}) or *fₖ = g*₂(*key*)). Therefore, the terminal, as the decoder side, cannot determine the generation rule of the first frozen bit. Optionally, that the generation rule of the first frozen bit is known to the decoder side includes the following case. For example, it is assumed that, for the encoder side, the generation rule of the first frozen bit is updating the first frozen bit based on a PDSCH associated with the DCI. Because the terminal can feed back indication information of the ACK or the NACK to the base station after receiving the PDSCH, both the terminal and the base station know whether the terminal correctly decodes the PDSCH, and both the encoder side and the decoder side determine to generate the first frozen bit in a same manner. Therefore, the terminal, as the decoder side, knows the generation rule of the first frozen bit.

In this embodiment, when encoding the current first to-be-encoded bit block, the encoder side determines the frozen bit for current encoding and encryption based on the second information bit or the second frozen bit associated with the second encoded bit block that is previously transmitted. This implements secure communication based on integrated encoding and encryption, and also improves randomness of the frozen bit, which is not easily obtained by an eavesdropper, thereby helping avoid leakage of the frozen bit, and improving security of encoding and encryption.

**III.** Specific implementation processes of the polar polar code-based communication method applied to different transmission scenarios according to this application

Example 1: a frozen bit update method and an integrated encoding and encryption solution in a non-multi-HARQ-process transmission scenario

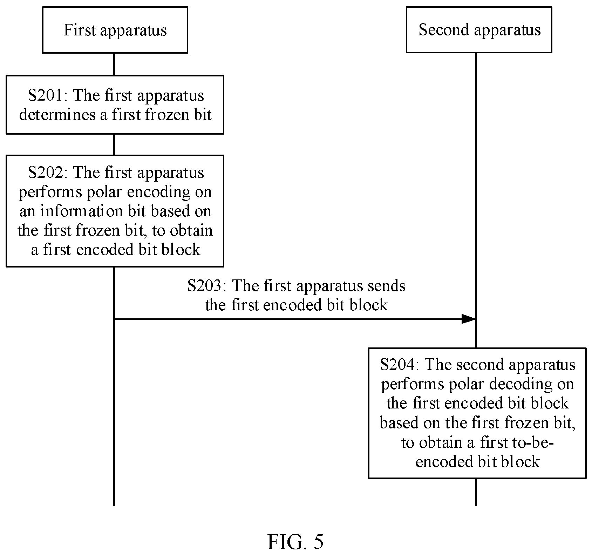

For example, FIG. 5 is a schematic flowchart of a specific implementation of the polar polar code-based communication method according to this application. The procedure is implemented through interaction between the first apparatus (encoder side) and the second apparatus (decoder side), and includes the following steps:
S201: The first apparatus determines a first frozen bit.

Based on the foregoing description, the first frozen bit is determined based on at least one of a second information bit, a second frozen bit, or a preset key, and the second information bit is related to a first to-be-encoded bit block.

For example, a relationship between the second information bit and the first to-be-encoded bit block may include but is not limited to one or more of the following: If the first to-be-encoded bit block includes first DCI, the second information bit is an information bit transmitted on a PDSCH or a PUSCH that is associated with second DCI before the first DCI; if the first to-be-encoded bit block includes first UCI, the second information bit is an information bit transmitted on a PDSCH or a PUSCH that is associated with second UCI before the first UCI; if the first to-be-encoded bit block includes an information bit transmitted on a first PDSCH, the second information bit is an information bit transmitted on a second PDSCH before the first to-be-encoded bit block; if the first to-be-encoded bit block includes an information bit transmitted on a first PUSCH, the second information bit is an information bit transmitted on a second PUSCH before the first to-be-encoded bit block; if the first to-be-encoded bit block includes an information bit transmitted on a first PDCCH, the second information bit is an information bit transmitted on a second PDCCH before the first to-be-encoded bit block; or if the first to-be-encoded bit block includes an information bit transmitted on a first PUCCH, the second information bit is an information bit transmitted on a second PUCCH before the first to-be-encoded bit block. The relationship between the second information bit and the first to-be-encoded bit block also shows that the communication method provided in this application is applicable to polar encoding on to-be-encoded bit blocks of different types (for example, different types of control information or information bits transmitted on different types of channels), to implement integrated encoding and encryption in different transmission scenarios, and improve data security. The following provides description by using an example in which the first to-be-encoded bit block includes first DCI, and the second information bit is an information bit transmitted on a PDSCH or a PUSCH associated with second DCI before the first DCI. Specific implementations of another type of the to-be-encoded bit block and another type of the second information bit are similar. For details, refer to the following example.

### (1) PDSCH-based frozen bit update method

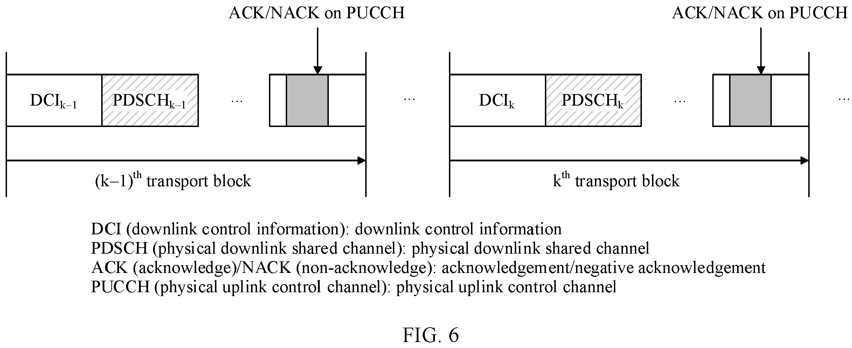

For example, FIG. 6 is a diagram of a PDSCH-based frozen bit update according to this application. In the embodiment of FIG. 6, the first apparatus is an encoder side (for example, a base station), and the second apparatus is a decoder side (for example, a terminal). DCIₖ₋₁ in FIG. 6 is second DCI in a second to-be-encoded block, PDSCHₖ₋₁ is a PDSCH (including the second information bit) associated with the second DCI, ACK/NACK on PUCCH represents an acknowledgement/negative acknowledgement carried on a PUCCH (that is, an acknowledgement/negative acknowledgement for PDSCHₖ₋₁), DCIₖ is first DCI in the first to-be-encoded block, and PDSCHₖ is a PDSCH associated with the first DCI. It is assumed that information bits such as DCIₖ₋₁ and PDSCHₖ₋₁ belong to a (k-1)^{th} transport block, and information bits such as DCIₖ and PDSCHₖ belong to a k^{th} transport block (the (k-1)^{th} transport block is first encoded and transmitted, and then the k^{th} transport block is encoded and transmitted). The PDSCH associated with the DCI may be a PDSCH indicated by the DCI. For example, information carried in the DCI may indicate a time-frequency domain resource for sending the PDSCH.

Optionally, it is assumed that the first DCI sent in the k^{th} transport block is represented as *dₖ*, a to-be-sent DCI information bit is represented as *mₖ*, and the first frozen bit for polar encoding is represented as *fₖ*; and the second DCI sent in the (k-1)^{th} transport block is represented as *d*_{*k*-1}, and an information bit sent on the PDSCH associated with the second DCI is represented as *i*_{*k*-1}. In this case, an implementation of S201 may include the following procedure.

Option 1: If an acknowledgement for the physical downlink shared channel is received, the first apparatus processes the second frozen bit and the second information bit based on a first function, to obtain the first frozen bit.

For example, if a PDSCH associated with *d*_{*k*-1} is successfully decoded by the receive end (that is, an ACK is fed back on a PUCCH), the first frozen bit is represented as *fₖ = g*₁(*f*_{*k*-1},*i*_{*k*-1}). Optionally, *i*_{*k*-1} represents a part or all of information bits sent on the PDSCH in the (k-1)^{th} transport block. This is not limited in this application. Optionally, it can be deduced from *fₖ* = *g*₁(*f*_{*k*-1},*i*_{*k*-1}) that *f*_{*k*-1} = *g*₁(*f*_{*k*-2},*i*_{*k*-2}), *f*_{*k*-2} = *g*₁(*f*_{*k*-3,}*i*_{*k*-3}), and the like. In other words, each frozen bit update is based on the frozen bit that is previously transmitted. This helps improve security. Optionally, the first frozen bit is represented as *fₖ* = *g*₁(*i*_{*k*-1}). In other words, the first apparatus may alternatively obtain the first frozen bit by processing the second information bit (excluding the second frozen bit) based on the first function. However, each frozen bit update is based on a part or all of information bits previously sent on the PDSCH, but not based on the frozen bit that is previously transmitted.

Optionally, the first function includes a combination of one or more of hash, truncation, concatenation, sampling, and symmetric encryption. For example, a specific implementation of the first function includes but is not limited to a combination of one or more of the following:
A. The first frozen bit is obtained by concatenating the second frozen bit and the second information bit, using a concatenation result as an input parameter of a hash function, and truncating an output result of the hash function. For example, the first function is represented as *g*₁(*f*_{*k*-1},*i*_{*k*-1}) = trunc(Hash(*f*_{*k*-1}∥*i*_{*k*-1})), where trunc represents truncation, Hash is a hash function, ∥ represents concatenation, and trunc(Hash(*f*_{*k*-1}∥*i*_{*k*-1})) represents that a length of a truncated bit string is consistent with a required length of the first frozen bit. Optionally, the second frozen bit and the second information bit are concatenated, and which bit is placed before or after the other is not limited. For example, the second frozen bit may be before the second information bit, or the second information bit may be before the second frozen bit.
B. The first frozen bit is an output result of a hash function, and an input parameter of the hash function includes a concatenation result obtained by concatenating the second frozen bit and the second information bit, and a required length of the first frozen bit. For example, the first function is represented as *g*₁(*f*_{*k*-1},*i*_{*k*-1}) = *Hash*(*f*_{*k*-1}∥*i*_{*k*-1},length), where length is equal to the required length of the first frozen bit. Optionally, when the input parameter of the hash function includes length, it indicates that a length of the output result of the hash function is the same as a value of length (the length of the output result is limited).
C. The first frozen bit is an output result of a hash function, and an input parameter of the hash function includes the second frozen bit and a required length of the first frozen bit. For example, the first function is represented as *g*₁(*f*_{*k*-1,}*i*_{*k*-1}) = trunc(Hash(*f*_{*k*-1}∥*i*_{*k*-1}∥*key*)), where length is equal to the required length of the first frozen bit.
D. The first frozen bit is obtained by concatenating the second frozen bit, the second information bit, and the preset key, using a concatenation result as an input parameter of a hash function, and truncating an output result of the hash function. For example, the first function is represented as *g*₁(*f*_{*k*-1},*i*_{*k*-1}) = trunc(Hash(*f*_{*k*-1}∥*i*_{*k*-1}∥*key*)), where key represents the preset key.
E. The first frozen bit is obtained by randomly sampling the second information bit, concatenating the second frozen bit and a random sampling result of the second information bit, using a concatenation result as an input parameter of a hash function, and truncating an output result of the hash function. For example, the first function is represented as *g*₁(*f*_{*k*-1},*i*_{*k*-1}) = trunc(Hash(*f*_{*k*-1}∥sampling(*i*_{*k*-1}))), where sampling represents random sampling, and a sampling pattern (pattern) is determined based on key and a preset encryption algorithm. A specific encryption algorithm is not limited in this application.
F. The first frozen bit is obtained by concatenating the second frozen bit and the second information bit, performing random sampling, using a random sampling result as an input parameter of a hash function, and truncating an output result of the hash function. For example, the first function is represented as *g*₁(*f*_{*k*-1},*i*_{*k*-1}) = trunc (Hash(sampling(*f*_{*k*-1}∥*i*_{*k*-1}))), where sampling represents random sampling, and a sampling pattern (pattern) is determined based on key and a preset encryption algorithm. A specific encryption algorithm is not limited in this application.
G. The first frozen bit is obtained by performing encryption computation on the second information bit and the preset key, concatenating the second frozen bit and an encryption computation result, using a concatenation result as an input parameter of a hash function, and truncating an output result of the hash function. For example, the first function is represented as *g*₁(*f*_{*k*-1},*i*_{*k*-1}) = trunc(Hash(*f*_{*k*-1}∥AES(*i*_{*k*-1},*key*))), where AES represents an advanced encryption standard (advanced encryption standard, AES) encryption algorithm, or another symmetric encryption algorithm may be selected. This is not limited in this application.

Option 2: If a negative acknowledgement for the physical downlink shared channel is received, the first apparatus processes at least one of the preset key or the second frozen bit based on the second function, to obtain the first frozen bit.

For example, if a PDSCH associated with *d*_{*k*-1} is not successfully decoded by the receive end (that is, a NACK is fed back on a PUCCH), the first frozen bit is represented as *fₖ = f*_{*k*-1}. For example, if a previously transmitted PDSCH is not successfully decoded by the receive end, and current transmission may be retransmission, the frozen bit is not updated in current transmission; or the first frozen bit is represented as *fₖ = g*₂(*key*). For example, the second function and the preset key are known to both the encoder side and the decoder side. This helps the decoder side determine the first frozen bit and perform correct decoding based on the first frozen bit.

Optionally, the second function includes a combination of one or more of hash, truncation, concatenation, sampling, and symmetric encryption. For example, a specific implementation of the second function includes but is not limited to a combination of one or more of the following:
A. The first frozen bit is obtained by using the preset key as an input parameter of a hash function and truncating an output result of the hash function. For example, the second function is represented as *g*₂(*key*) = trunc(Hash(key)).
B. The first frozen bit is an output result of a hash function, and an input parameter of the hash function includes the preset key and a required length of the first frozen bit. For example, the second function is represented as *g*₂*(key)* = Hash(key, length).
C. The first frozen bit is an output result of a hash function, and an input parameter of the hash function includes a concatenation result of the preset key and the second frozen bit, and a required length of the first frozen bit. For example, the second function is represented as *g*₂*(key)* = Hash(*key*∥*f*_{*k*-1}, length).
D. The first frozen bit is an output result of a hash function, and an input parameter of the hash function includes a random sampling result obtained by randomly sampling after concatenating the preset key and the second frozen bit, and a required length of the first frozen bit. For example, the second function is represented as *g*₂(*key*) *=* Hash(sampling(*key*∥*f*_{*k*-1}), length).

Optionally, for uplink transmission, an implementation procedure of S201 is similar. For example, it is assumed that the first UCI sent in the k^{th} transport block is represented as *dₖ*, a to-be-sent UCI information bit is represented as *mₖ*, and the first frozen bit for polar encoding is represented as *fₖ*; and the second UCI sent in the (k-1)^{th} transport block is represented as *d*_{*k*-1}, and an information bit sent on the PUSCH associated with the second UCI is represented as *i*_{*k*-1}. If indication information associated with the second UCI indicates that the PUSCH associated with the second UCI is successfully decoded by the transmit end, the first frozen bit is represented as *fₖ* = *g*₁(*f*_{*k*-1},*i*_{*k*-1}); or if indication information associated with the second UCI indicates that the PUSCH associated with the second UCI is not successfully decoded by the transmit end, the first frozen bit is represented as *fₖ = f*_{*k*-1} or *fₖ* = *g*₂(*key*).

### (2) PUSCH-based frozen bit update method

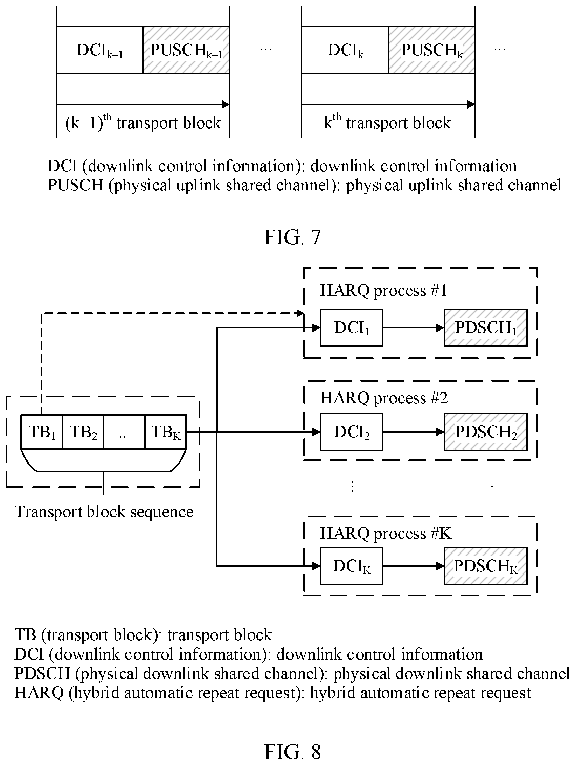

For example, FIG. 7 is a diagram of a PUSCH-based frozen bit update according to this application. In the embodiment of FIG. 7, the first apparatus is an encoder side (for example, a base station), and the second apparatus is a decoder side (for example, a terminal). DCIₖ₋₁ in FIG. 7 is second DCI in a second to-be-encoded block, PUSCHₖ₋₁ is a PUSCH (including the second information bit) associated with the second DCI, DCIₖ is first DCI in the first to-be-encoded block, and PUSCHₖ is a PUSCH associated with the first DCI. It is assumed that information bits such as DCIₖ₋₁ and PUSCHₖ₋₁ belong to a (k-1)^{th} transport block, and information bits such as DCIₖ and PUSCHₖ belong to a k^{th} transport block (the (k-1)^{th} transport block is first encoded and transmitted, and then the k^{th} transport block is encoded and transmitted). The PUSCH associated with the DCI is a PUSCH indicated by the DCI. For example, information carried in the DCI may indicate a time-frequency domain resource for sending the PUSCH.

Optionally, it is assumed that the first DCI sent in the k^{th} transport block is represented as *dₖ*, a to-be-sent DCI information bit is represented as *mₖ*, and the first frozen bit for polar encoding is represented as *fₖ*; and the second DCI sent in the (k-1)^{th} transport block is represented as *d*_{*k*-1}, and an information bit sent on the PUSCH associated with the second DCI is represented as *i*_{*k*-1}. In this case, an implementation of S201 may include the following procedure.

Option 1: If the physical uplink shared channel is successfully decoded, the first apparatus processes the second frozen bit and the second information bit based on a first function, to obtain the first frozen bit.

For example, if a PUSCH associated with *d*_{*k*-1} is successfully decoded by the base station end (it is assumed that uplink transmission is performed, the base station is an encoder side, and the base station receives the PUSCH), the first frozen bit is represented as *fₖ = g*₁(*f*_{*k*-1},*i*_{*k*-1}) Optionally, *i*_{*k*-1} represents a part or all of information bits sent on the PUSCH in the (k-1)^{th} transport block. This is not limited in this application. Optionally, the first frozen bit is represented as *fₖ = g*₁(*i*_{*k*-1}). In other words, the first apparatus may alternatively obtain the first frozen bit by processing the second information bit (excluding the second frozen bit) based on the first function. However, each frozen bit update is based on a part or all of information bits previously sent on the PUSCH, but not based on the frozen bit that is previously transmitted. Optionally, for a specific implementation of the first function, refer to the foregoing corresponding description. Details are not described herein again.

Option 2: If the physical uplink shared channel is not successfully decoded, the first apparatus processes at least one of the preset key or the second frozen bit based on a second function, to obtain the first frozen bit.

For example, if a PUSCH associated with *d*_{*k*-1} is not successfully decoded by the base station end (it is assumed that uplink transmission is performed, the base station is an encoder side, and the base station receives the PUSCH), the first frozen bit is represented as *fₖ = f*_{*k*-1}. For example, if a previously transmitted PUSCH is not successfully decoded by the base station end, and current transmission may be retransmission, the frozen bit is not updated in current transmission; or the first frozen bit is represented as *fₖ = g*₂(*key*). For example, the second function and the preset key are known to both the encoder side and the decoder side. This helps the decoder side determine the first frozen bit and perform correct decoding based on the first frozen bit. Optionally, for a specific implementation of the second function, refer to the foregoing corresponding description. Details are not described herein again.

Optionally, for uplink transmission, an implementation procedure of S201 is similar. For example, it is assumed that the first UCI sent in the k^{th} transport block is represented as *dₖ*, a to-be-sent UCI information bit is represented as *mₖ,* and the first frozen bit for polar encoding is represented as *fₖ*; and the second UCI sent in the (k-1)^{th} transport block is represented as *d*_{*k*-1}, and an information bit sent on the PDSCH associated with the second UCI is represented as *i*_{*k*-1}. If indication information associated with the second UCI indicates that the PDSCH associated with the second UCI is successfully decoded by the receive end, the first frozen bit is represented as *fₖ = g*₁(*f*_{*k*-1},*i*_{*k*-1}); or if indication information associated with the second UCI indicates that the PDSCH associated with the second UCI is not successfully decoded by the receive end, the first frozen bit is represented as *fₖ = f*_{*k*-1} or *fₖ* = *g*₂(*key*).

S202: The first apparatus performs polar encoding on the information bit based on the first frozen bit, to obtain a first encoded bit block.

For example, after determining the first frozen bit *fₖ*, the first apparatus performs polar encoding to obtain the first encoded bit block *dₖ* = ECC(*mₖ*,*fₖ*).

S203: The first apparatus sends the first encoded bit block. Correspondingly, the second apparatus receives the first encoded bit block.

For example, the first encoded bit block includes DCI. In this case, that the first apparatus sends the first encoded bit block indicates that the base station sends the DCI to the terminal. Correspondingly, the terminal receives the DCI.

S204: The second apparatus performs polar decoding on the first encoded bit block based on the first frozen bit, to obtain a first to-be-encoded bit block.

For example, in the PDSCH-based frozen bit update method, because the decoder side may feed back an ACK/NACK, a generation rule of the first frozen bit is known to the decoder side. In this case, the decoder side may obtain the first frozen bit based on the generation rule, and perform decoding based on the first frozen bit to obtain the first to-be-encoded bit block.

For another example, in the PUSCH-based frozen bit update method, because the decoder side cannot determine whether the encoder side successfully decodes the physical uplink shared channel, a generation rule of the first frozen bit is unknown to the decoder side. In this case, the decoder side may assume that the generation rule of the first frozen bit is *fₖ* = *g*₁(*f*_{*k*-1},*i*_{*k*-1}), *fₖ* = *f*_{*k*-1}, *or fₖ = g*₂*(key),* and separately perform decoding attempts based on a plurality of possible first frozen bits, and determine, based on whether CRC check succeeds, which assumption is correct. In this way, the first to-be-encoded bit block can be finally obtained, that is, a currently transmitted information bit is obtained.

In Example 1, when encoding the current first to-be-encoded bit block, the encoder side determines the frozen bit for current encoding and encryption based on the second information bit or the second frozen bit associated with the second encoded bit block that is previously transmitted. This implements secure communication based on integrated encoding and encryption, and also improves randomness of the frozen bit, which is not easily obtained by an eavesdropper, thereby helping avoid leakage of the frozen bit, and improving security of encoding and encryption.

Example 2: a frozen bit update method and an integrated encoding and encryption solution in a multi-HARQ-process transmission scenario

For example, FIG. 8 is a diagram of the polar polar code-based communication method applied to the multi-HARQ-process transmission scenario according to this application. It is assumed that there are K transport blocks (transport block, TB), for example, a TB₁ to a TB_{K}. It is assumed that each TB includes DCI and a PDSCH (as shown in FIG. 6). Each TB corresponds to one HARQ process. For example, the TB₁ corresponds to a HARQ process #1, and so on, and the TB_{K} corresponds to a HARQ process #K, as shown in FIG. 8. Optionally, a HARQ process corresponding to each transport block is determined by a HARQ process identifier (HARQ process ID) carried by DCI in the transport block. A frozen bit of DCI in each HARQ process is updated only by using transport block data (for example, PDSCH data in FIG. 8) in the HARQ process.

Optionally, based on whether the transport block data in the HARQ process is sent on a downlink channel (PDSCH data) or sent on an uplink channel (PUSCH data), a specific implementation of Example 2 includes the following cases.

Case 1: PDSCH-based frozen bit update
(1) For the encoder side, in a possible implementation, it is assumed that a plurality of HARQ processes separately update frozen bits. In this case, for each HARQ process, the first frozen bit is determined based on at least one of a second information bit, a second frozen bit, or a preset key of the HARQ process. For a specific implementation, refer to the corresponding description in the foregoing embodiment. Details are not described herein again.

In another possible implementation, it is assumed that a plurality of HARQ processes jointly update frozen bits. It is assumed that there is one frozen bit update period, and the first frozen bit is determined based on at least one of the second information bit, the second frozen bit, or the preset key when the frozen bit update period expires. The second information bit is an information bit in one or more HARQ processes in the frozen bit update period, and the second frozen bit is a frozen bit in the one or more HARQ processes in the frozen bit update period. For example, when a plurality of encoded bit blocks are respectively transmitted in a plurality of hybrid automatic repeat request HARQ processes, the first apparatus determines frozen bit update periods. When one frozen bit update period expires, the first apparatus determines the first frozen bit based on at least one of the second information bit, the second frozen bit, or the preset key.

Optionally, the frozen bit update period is a largest time interval in a plurality of time intervals corresponding to the plurality of HARQ processes, or the frozen bit update period is a preset time interval. The time interval is a time interval between a physical downlink shared channel in one of the plurality of HARQ processes and an acknowledgement or a negative acknowledgement for the physical downlink shared channel.

In a possible implementation, the time interval is configured by the network device for the terminal. For example, the time interval is configured by using RRC signaling.

For example, there is a preset time interval K1 between the ACK/NACK transmitted from the PDSCH to the PUCCH, and the time interval is defined by a parameter dl-DataToUL-ACK of a PUCCH configuration (PUCCH-config) in the RRC signaling. According to this feature, the largest K1 in all HARQ processes may be used as the frozen bit update period. It may be understood that, if the largest K1 is used as the frozen bit update period, this helps update frozen bits in all the HARQ processes, thereby improving security.

Optionally, when the frozen bit update period expires, the encoder side may update the frozen bit based on an ACK/NACK status of a PDSCH in each HARQ process in the frozen bit update period. For example, the frozen bit is updated based on all successfully sent PDSCHs in the frozen bit update period, or the frozen bit is updated based on a PDSCH successfully sent in a HARQ process with a smallest HARQ process number in the frozen bit update period, or the frozen bit is updated based on a PDSCH successfully sent in a HARQ process with a largest HARQ process number in the frozen bit update period, or the frozen bit is updated based on a PDSCH successfully sent in any HARQ process in the frozen bit update period. This is not limited in this application. The updated frozen bit is used for DCI of all subsequent HARQ processes in the update period until a next frozen bit update period. This helps improve randomness of the frozen bit, avoid excessively frequent frozen bit updates, and help reduce computational overheads.

Optionally, for a specific implementation in which the encoder side updates the frozen bit based on the ACK/NACK status of the PDSCH in each HARQ process in the frozen bit update period, refer to corresponding description in the PDSCH-based frozen bit update method. For example, if the acknowledgement for the physical downlink shared channel is received in N HARQ processes in the frozen bit update period, the first frozen bit is obtained by processing the second frozen bit and the second information bit in the N HARQ processes based on the first function, and N is a positive integer. For example, for the N HARQ processes, the step of determining the first frozen bit *fₖ = g*₁(*f*_{*k*-1},*i*_{*k*-1}) based on the second frozen bit and the second information bit is separately performed. In this case, first frozen bits in the N HARQ processes can be separately determined, and the respective first frozen bits in the HARQ processes are used for polar encoding. Alternatively, for the N HARQ processes, the step of determining the first frozen bit *fₖ = g*₁(*f*_{*k*-1},*i*_{*k*-1}) based on the second frozen bit and the second information bit is performed by selecting a HARQ process with a smallest HARQ process number. In this case, the first frozen bit in the HARQ process with the smallest HARQ process number can be determined, and the first frozen bit in the HARQ process with the smallest HARQ process number is used for polar encoding in all subsequent HARQ processes (for example, HARQ processes whose numbers are greater than the smallest HARQ process number). Alternatively, the first frozen bit is obtained by processing the second frozen bit and the second information bit in M HARQ processes based on the first function, the M HARQ processes are any M HARQ processes in the N HARQ processes, and M is a positive integer less than or equal to N. For example, for the M HARQ processes, it is assumed that an ACK for a PDSCH is received in M₁ HARQ processes of the M processes, the step of determining the first frozen bit *fₖ = g*₁(*f*_{*k*-1},*i*_{*k*-1}) based on the second frozen bit and the second information bit is separately performed for the Mi HARQ processes. In this case, first frozen bits in the M₁ HARQ processes can be separately determined, and the respective first frozen bits in the M₁ HARQ processes are used for polar encoding. It is assumed that a NACK for the PDSCH is received in M₂ HARQ processes of the M processes, the step of determining the first frozen bit *fₖ = f*_{*k*-1} or *fₖ = g*₂*(key)* based on the second frozen bit or the preset key is separately performed for the M₂ HARQ processes. In this case, first frozen bits in the M₂ HARQ processes can be separately determined, and the respective first frozen bits in the M₂ HARQ processes are used for polar encoding.

(2) For the decoder side, the decoder side may decode received DCI by using a blind detection method. Before decoding, the decoder side does not know which HARQ process the received DCI belongs to. Therefore, the decoder side may attempt various possibilities of the frozen bit by using a traversal method, to determine the frozen bit. For example, the decoder side assumes that the received DCI belongs to a HARQ process (for example, the HARQ process #1), and then generates a frozen bit based on the DCI frozen bit update method by using PDSCH data that is previously successfully transmitted in the HARQ process, and decodes the DCI based on the frozen bit. By analogy, all possible HARQ processes (for example, the HARQ process #1 to the HARQ process #K) are traversed, until the frozen bit is determined (for example, whether the DCI is successfully decoded may be determined based on a CRC check result, to determine whether the assumed frozen bit is correct), to complete DCI decoding and frozen bit synchronization.

Case 2: PUSCH-based frozen bit update
(1) For the encoder side, in a possible implementation, it is assumed that a plurality of HARQ processes separately update frozen bits. In this case, for each HARQ process, the first frozen bit is determined based on at least one of a second information bit, a second frozen bit, or a preset key of the HARQ process. For a specific implementation, refer to the corresponding description in the foregoing embodiment. Details are not described herein again.

In another possible implementation, it is assumed that a plurality of HARQ processes jointly update frozen bits. It is assumed that there is one frozen bit update period. When the frozen bit update period expires, the first frozen bit is determined based on at least one of the second information bit, the second frozen bit, or the preset key. The second information bit is an information bit in one or more HARQ processes in the frozen bit update period, and the second frozen bit is a frozen bit in the one or more HARQ processes in the frozen bit update period. For example, when a plurality of encoded bit blocks are respectively transmitted in a plurality of hybrid automatic repeat request HARQ processes, the first apparatus determines frozen bit update periods. When one frozen bit update period expires, the first apparatus determines the first frozen bit based on at least one of the second information bit, the second frozen bit, or the preset key.

Optionally, for PUSCH transmission, because there is no ACK/NACK, and there is no parameter such as dl-DataToUL-ACK, the frozen bit update period is a preset time interval. In the time interval, the encoder side and the decoder side do not update the frozen bit. After the time interval expires, the encoder side and the decoder side update frozen bits used by the DCI in all HARQ processes.

Optionally, if the PUSCH is successfully decoded in at least one HARQ process in the frozen bit update period, the first frozen bit is obtained by processing, based on the first function, the second frozen bit and the second information bit in the at least one HARQ process in which the PUSCH is successfully decoded. For example, if the PUSCH is successfully decoded in the last HARQ process in the frozen bit update period, the frozen bit is updated based on the PUSCH in the last HARQ process. For a specific update manner, refer to the foregoing corresponding description. Otherwise, the frozen bit is not updated. For another example, if the PUSCH is successfully decoded in the first HARQ process in the frozen bit update period, the frozen bit is updated based on the PUSCH in the first HARQ process. For a specific update manner, refer to the foregoing corresponding description. Otherwise, the frozen bit is not updated.

(2) For the decoder side, the decoder side may decode received DCI by using a blind detection method. Before decoding, the decoder side does not know which HARQ process the received DCI belongs to. Therefore, the decoder side may attempt various possibilities of the frozen bit by using a traversal method, to determine the frozen bit. For example, the decoder side assumes that the received DCI belongs to a HARQ process (for example, the HARQ process #1), and then generates a frozen bit based on the DCI frozen bit update method by using PUSCH data that is previously transmitted in the HARQ process, and decodes the DCI based on the frozen bit. By analogy, all possible HARQ processes (for example, the HARQ process #1 to the HARQ process #K) are traversed, until the frozen bit is determined (for example, whether the DCI is successfully decoded may be determined based on a CRC check result, to determine whether the assumed frozen bit is correct), to complete DCI decoding and frozen bit synchronization.

Optionally, a case in which transport block data in the HARQ process is a bit block (downlink) transmitted on the PDCCH or a bit block (uplink) transmitted on the PUCCH is similar to the case of the PDSCH data or the PUSCH data. Refer to the implementations of Case 1 and Case 2, and details are not described herein again.

In Example 2, when a plurality of transport blocks are transmitted in a plurality of HARQ processes, a method similar to a polar code-based frozen bit update method in a single process may also be used. This implements secure communication based on integrated encoding and encryption.

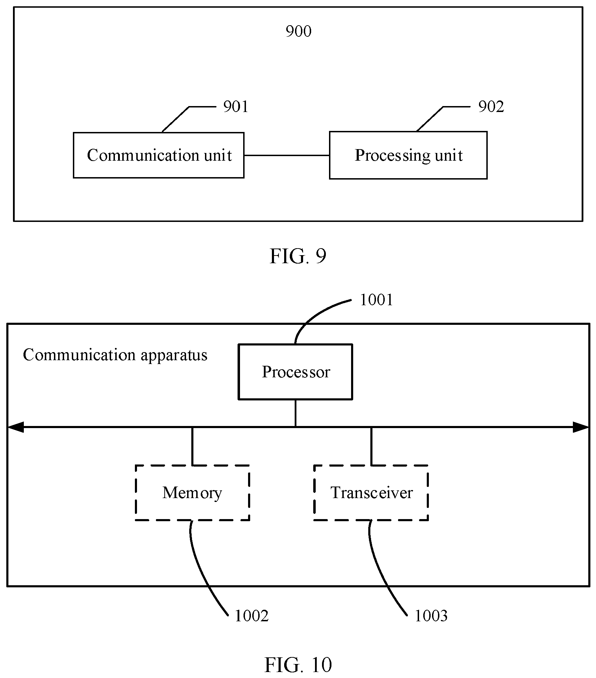

FIG. 9 is a diagram of a communication apparatus according to this application. The apparatus may include modules that are in a one-to-one correspondence with the methods/operations/steps/actions described in any one of the embodiments shown in FIG. 4 to FIG. 8. The modules may be implemented by a hardware circuit, software, or a combination of a hardware circuit and software.

The apparatus 900 includes a communication unit 901 and a processing unit 902, configured to implement the method performed by each device in the foregoing embodiments. The communication unit 901 is also referred to as a transceiver unit. The transceiver unit includes a sending unit and a receiving unit. The sending unit is configured to send a signal, and the receiving unit is configured to receive a signal.

In a possible implementation, the apparatus is an apparatus for implementing an encoding function, for example, a network device or a terminal. Specifically, the processing unit 902 is configured to perform polar encoding on a first to-be-encoded bit block, to obtain a first encoded bit block, where the first to-be-encoded bit block includes a first frozen bit, the first frozen bit is determined based on at least one of a second information bit, a second frozen bit, or a preset key, the second information bit or the second frozen bit is associated with a second encoded bit block, and the second encoded bit block is a bit block transmitted before the first encoded bit block. The communication unit 901 is configured to send the first encoded bit block.

For specific execution procedures of the communication unit 901 and the processing unit 902 in this implementation, refer to the descriptions of the steps performed by the first apparatus in the foregoing method embodiments and related descriptions. Details are not described herein again. In the polar polar code-based communication method implemented by the apparatus, when encoding the current first to-be-encoded bit block, an encoder side determines the frozen bit for current encoding and encryption based on the second information bit or the second frozen bit associated with the second encoded bit block that is previously transmitted. This implements secure communication based on integrated encoding and encryption, and also improves randomness of the frozen bit, which is not easily obtained by an eavesdropper, thereby helping avoid leakage of the frozen bit, and improving security of encoding and encryption.

In a possible implementation, the apparatus is an apparatus for implementing a decoding function, for example, a terminal or a network device. Specifically, the communication unit 901 is configured to receive a first encoded bit block. The processing unit 902 is configured to perform polar decoding on the first encoded bit block based on a first frozen bit, to obtain a first to-be-encoded bit block. The first frozen bit is determined based on at least one of a second information bit, a second frozen bit, or a preset key, the second information bit or the second frozen bit is associated with a second encoded bit block, and the second encoded bit block is a bit block transmitted before the first encoded bit block.

For specific execution procedures of the communication unit 901 and the processing unit 902 in this implementation, refer to the descriptions of the steps performed by the second apparatus in the foregoing method embodiments and related descriptions. Details are not described herein again. In the polar polar code-based communication method implemented by the apparatus, when decoding the currently received encoded bit block, a decoder side determines the first frozen bit based on the second information bit and the second frozen bit in a previous decoding result, and performs decoding based on the first frozen bit, thereby implementing secure communication based on integrated decoding and decryption.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 10 is another diagram of a structure of a communication apparatus according to an embodiment of this application. The communication apparatus may be configured to perform the steps performed by the first apparatus or the second apparatus in the foregoing method embodiments. For details, refer to related descriptions in the foregoing method embodiments.

The communication apparatus includes a processor 1001. Optionally, the communication apparatus further includes a memory 1002 and a transceiver 1003.

In a possible implementation, the processor 1001, the memory 1002, and the transceiver 1003 are separately connected by using a bus, and the memory stores computer instructions.

Optionally, the processing unit 902 in the foregoing embodiment may be specifically the processor 1001 in this embodiment. Therefore, specific implementation of the processor 1001 is not described again. The communication unit 901 in the foregoing embodiment may be specifically the transceiver 1003 in this embodiment. Therefore, a specific implementation of the transceiver 1003 is not described again.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of instructions or a data structure and that can be accessed by a computer, but is not limited thereto. Alternatively, the memory in this application may be a circuit or any other apparatus that can implement a storage function, and is configured to store program instructions and/or data.

This application provides another communication apparatus. The device includes a processor and an interface. Optionally, a memory is further included. The processor is coupled to the memory, and the processor is configured to read and execute computer instructions stored in the memory, to implement the polar polar code-based communication method in the embodiments shown in FIG. 4 to FIG. 8.

An embodiment of this application further provides a communication system. The communication system includes a first apparatus and a second apparatus. The first apparatus is configured to perform all or some of the steps performed by the first apparatus in the foregoing embodiments. The second apparatus is configured to perform all or some of the steps performed by the second apparatus in the foregoing embodiments.

This application provides a computer-readable storage medium. The computer-readable storage medium stores a program or instructions. When the program or the instructions are run on a computer, the computer is enabled to perform the polar polar code-based communication method in the embodiments shown in FIG. 4 to FIG. 8.

This application provides a computer program product. The computer program product includes instructions. When the instructions are run on a computer, the computer is enabled to perform the polar polar code-based communication method in the embodiments shown in FIG. 4 to FIG. 8.

This application provides a chip or a chip system. The chip or the chip system includes at least one processor and an interface. The interface and the at least one processor are interconnected through a line. The at least one processor is configured to run a computer program or instructions, to perform the polar polar code-based communication method in the embodiments shown in FIG. 4 to FIG. 8.

The interface in the chip may be an input/output interface, a pin, a circuit, or the like.

The chip system may be a system on chip (system on chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, that integrates one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

It is clear that a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A polar polar code-based communication method, wherein the method comprises:
performing polar encoding on a first to-be-encoded bit block, to obtain a first encoded bit block, wherein the first to-be-encoded bit block comprises a first frozen bit, the first frozen bit is determined based on at least one of a second information bit, a second frozen bit, or a preset key, the second information bit or the second frozen bit is associated with a second encoded bit block, and the second encoded bit block is a bit block transmitted before the first encoded bit block; and
sending the first encoded bit block.

2. The method according to claim 1, wherein the first to-be-encoded bit block comprises at least one of downlink control information, uplink control information, a bit block transmitted on a physical downlink shared channel, a bit block transmitted on a physical uplink shared channel, a bit block transmitted on a physical downlink control channel, and a bit block transmitted on a physical uplink control channel.

3. The method according to claim 2, wherein if the first to-be-encoded bit block comprises first downlink control information, the second information bit is an information bit transmitted on a physical downlink shared channel or a physical uplink shared channel that is associated with second downlink control information before the first downlink control information; or
if the first to-be-encoded bit block comprises first uplink control information, the second information bit is an information bit transmitted on a physical downlink shared channel or a physical uplink shared channel that is associated with second uplink control information before the first uplink control information; or
if the first to-be-encoded bit block comprises an information bit transmitted on a first physical downlink shared channel, the second information bit is an information bit transmitted on a second physical downlink shared channel before the first to-be-encoded bit block; or
if the first to-be-encoded bit block comprises an information bit transmitted on a first physical uplink shared channel, the second information bit is an information bit transmitted on a second physical uplink shared channel before the first to-be-encoded bit block; or
if the first to-be-encoded bit block comprises an information bit transmitted on a first physical downlink control channel, the second information bit is an information bit transmitted on a second physical downlink control channel before the first to-be-encoded bit block; or
if the first to-be-encoded bit block comprises an information bit transmitted on a first physical uplink control channel, the second information bit is an information bit transmitted on a second physical uplink control channel before the first to-be-encoded bit block.

4. The method according to claim 2 or 3, wherein if an acknowledgement for the physical downlink shared channel is received or the physical uplink shared channel is successfully decoded, the first frozen bit is obtained by processing the second frozen bit and the second information bit based on a first function.

5. The method according to claim 2 or 3, wherein if a negative acknowledgement for the physical downlink shared channel is received or the physical uplink shared channel is not successfully decoded, the first frozen bit is obtained by processing at least one of the preset key or the first frozen bit based on a second function.

6. The method according to claim 2 or 3, wherein the method further comprises:
if an acknowledgement for the physical downlink shared channel is received or the physical uplink shared channel is successfully decoded, processing the second frozen bit and the second information bit based on a first function, to obtain the first frozen bit.

7. The method according to claim 2 or 3, wherein the method further comprises:
if a negative acknowledgement for the physical downlink shared channel is received or the physical uplink shared channel is not successfully decoded, determining that the first frozen bit is the same as the second frozen bit; or processing at least one of the preset key or the second frozen bit based on a second function, to obtain the first frozen bit.

8. The method according to any one of claims 1 to 7, wherein the first frozen bit is determined based on at least one of the second information bit, the second frozen bit, or the preset key when a frozen bit update period expires, the second information bit is an information bit in one or more hybrid automatic repeat request HARQ processes in the frozen bit update period, and the second frozen bit is a frozen bit in the one or more HARQ processes in the frozen bit update period.

9. The method according to claim 8, wherein the method further comprises:
when a plurality of encoded bit blocks are respectively transmitted in a plurality of hybrid automatic repeat request HARQ processes, determining frozen bit update periods; and
when one frozen bit update period expires, determining the first frozen bit based on at least one of the second information bit, the second frozen bit, or the preset key, wherein the second information bit is an information bit in one or more HARQ processes in the frozen bit update period, and the second frozen bit is a frozen bit in the one or more HARQ processes in the frozen bit update period.

10. The method according to claim 8 or 9, wherein the frozen bit update period is a largest time interval in a plurality of time intervals corresponding to the plurality of HARQ processes, or the frozen bit update period is a preset time interval; and
the time interval is a time interval between a physical downlink shared channel in one of the plurality of HARQ processes and an acknowledgement or a negative acknowledgement for the physical downlink shared channel.

11. The method according to claim 8, wherein if the acknowledgement for the physical downlink shared channel is received in N HARQ processes in the frozen bit update period, the first frozen bit is obtained by processing the second frozen bit and the second information bit in the N HARQ processes based on the first function, and N is a positive integer; or
the first frozen bit is obtained by processing the second frozen bit and the second information bit in M HARQ processes based on the first function, the M HARQ processes are any M HARQ processes in the N HARQ processes, and M is a positive integer less than or equal to N.

12. The method according to claim 8, wherein the method further comprises:
if the acknowledgement for the physical downlink shared channel is received in N HARQ processes in the frozen bit update period, processing the second frozen bit and the second information bit in the N HARQ processes based on the first function, to obtain the first frozen bit.

13. The method according to claim 8, wherein the method further comprises:
processing the second frozen bit and the second information bit in M HARQ processes based on the first function, to obtain the first frozen bit, wherein the M HARQ processes are any M HARQ processes in the N HARQ processes, and M is a positive integer less than or equal to N.

14. The method according to claim 8, wherein if the physical uplink shared channel is successfully decoded in at least one HARQ process in the frozen bit update period, the first frozen bit is obtained by processing, based on the first function, the second frozen bit and the second information bit in the at least one HARQ process in which the physical uplink shared channel is successfully decoded.

15. The method according to claim 8, wherein the method further comprises:
if the physical uplink shared channel is successfully decoded in at least one HARQ process in the frozen bit update period, processing, based on the first function, the second frozen bit and the second information bit in the at least one HARQ process in which the physical uplink shared channel is successfully decoded, to obtain the first frozen bit.

16. The method according to any one of claims 4 to 15, wherein the first function or the second function comprises a combination of one or more of hash, truncation, concatenation, sampling, and symmetric encryption.

17. A polar polar code-based communication method, wherein the method comprises:
receiving a first encoded bit block; and
performing polar decoding on the first encoded bit block based on a first frozen bit, to obtain a first to-be-encoded bit block, wherein the first frozen bit is determined based on at least one of a second information bit, a second frozen bit, or a preset key, the second information bit or the second frozen bit is associated with a second encoded bit block, and the second encoded bit block is a bit block transmitted before the first encoded bit block.

18. The method according to claim 17, wherein the first to-be-encoded bit block comprises at least one of downlink control information, uplink control information, a bit block transmitted on a physical downlink shared channel, a bit block transmitted on a physical uplink shared channel, a bit block transmitted on a physical downlink control channel, and a bit block transmitted on a physical uplink control channel.

19. The method according to claim 18, wherein if the first to-be-encoded bit block comprises first downlink control information, the second information bit is an information bit transmitted on a physical downlink shared channel or a physical uplink shared channel that is associated with second downlink control information before the first downlink control information; or
if the first to-be-encoded bit block comprises first uplink control information, the second information bit is an information bit transmitted on a physical downlink shared channel or a physical uplink shared channel that is associated with second uplink control information before the first uplink control information; or
if the first to-be-encoded bit block comprises an information bit transmitted on a first physical downlink shared channel, the second information bit is an information bit transmitted on a second physical downlink shared channel before the first to-be-encoded bit block; or
if the first to-be-encoded bit block comprises an information bit transmitted on a first physical uplink shared channel, the second information bit is an information bit transmitted on a second physical uplink shared channel before the first to-be-encoded bit block; or
if the first to-be-encoded bit block comprises an information bit transmitted on a first physical downlink control channel, the second information bit is an information bit transmitted on a second physical downlink control channel before the first to-be-encoded bit block; or
if the first to-be-encoded bit block comprises an information bit transmitted on a first physical uplink control channel, the second information bit is an information bit transmitted on a second physical uplink control channel before the first to-be-encoded bit block.

20. The method according to any one of claims 17 to 19, wherein the first frozen bit is obtained by processing the second information bit and the second frozen bit based on a first function; or
the first frozen bit is obtained by processing at least one of the preset key or the second frozen bit based on a second function.

21. A communication apparatus, comprising a communication unit and a processing unit, wherein
the processing unit is configured to perform polar encoding on a first to-be-encoded bit block, to obtain a first encoded bit block, wherein the first to-be-encoded bit block comprises a first frozen bit, the first frozen bit is determined based on at least one of a second information bit, a second frozen bit, or a preset key, the second information bit or the second frozen bit is associated with a second encoded bit block, and the second encoded bit block is a bit block transmitted before the first encoded bit block; and
the communication unit is configured to send the first encoded bit block.

22. The apparatus according to claim 21, wherein the first to-be-encoded bit block comprises at least one of downlink control information, uplink control information, a bit block transmitted on a physical downlink shared channel, a bit block transmitted on a physical uplink shared channel, a bit block transmitted on a physical downlink control channel, and a bit block transmitted on a physical uplink control channel.

23. The apparatus according to claim 22, wherein if the first to-be-encoded bit block comprises first downlink control information, the second information bit is an information bit transmitted on a physical downlink shared channel or a physical uplink shared channel that is associated with second downlink control information before the first downlink control information; or
if the first to-be-encoded bit block comprises first uplink control information, the second information bit is an information bit transmitted on a physical downlink shared channel or a physical uplink shared channel that is associated with second uplink control information before the first uplink control information; or
if the first to-be-encoded bit block comprises an information bit transmitted on a first physical downlink shared channel, the second information bit is an information bit transmitted on a second physical downlink shared channel before the first to-be-encoded bit block; or
if the first to-be-encoded bit block comprises an information bit transmitted on a first physical uplink shared channel, the second information bit is an information bit transmitted on a second physical uplink shared channel before the first to-be-encoded bit block; or
if the first to-be-encoded bit block comprises an information bit transmitted on a first physical downlink control channel, the second information bit is an information bit transmitted on a second physical downlink control channel before the first to-be-encoded bit block; or
if the first to-be-encoded bit block comprises an information bit transmitted on a first physical uplink control channel, the second information bit is an information bit transmitted on a second physical uplink control channel before the first to-be-encoded bit block.

24. The apparatus according to claim 22 or 23, wherein if an acknowledgement for the physical downlink shared channel is received or the physical uplink shared channel is successfully decoded, the first frozen bit is obtained by processing the second frozen bit and the second information bit based on a first function.

25. The apparatus according to claim 22 or 23, wherein if a negative acknowledgement for the physical downlink shared channel is received or the physical uplink shared channel is not successfully decoded, the first frozen bit is obtained by processing at least one of the preset key or the first frozen bit based on a second function.

26. The apparatus according to claim 22 or 23, wherein the processing unit is further configured to:
if an acknowledgement for the physical downlink shared channel is received or the physical uplink shared channel is successfully decoded, process the second frozen bit and the second information bit based on a first function, to obtain the first frozen bit.

27. The apparatus according to claim 22 or 23, wherein the processing unit is further configured to:
if a negative acknowledgement for the physical downlink shared channel is received or the physical uplink shared channel is not successfully decoded, determine that the first frozen bit is the same as the second frozen bit; or process at least one of the preset key or the second frozen bit based on a second function, to obtain the first frozen bit.

28. The apparatus according to any one of claims 21 to 27, wherein the first frozen bit is determined based on at least one of the second information bit, the second frozen bit, or the preset key when a frozen bit update period expires, the second information bit is an information bit in one or more hybrid automatic repeat request HARQ processes in the frozen bit update period, and the second frozen bit is a frozen bit in the one or more HARQ processes in the frozen bit update period.

29. The apparatus according to claim 28, wherein the processing unit is further configured to:
when a plurality of encoded bit blocks are respectively transmitted in a plurality of hybrid automatic repeat request HARQ processes, determine frozen bit update periods; and
when one frozen bit update period expires, determine the first frozen bit based on at least one of the second information bit, the second frozen bit, or the preset key, wherein the second information bit is an information bit in one or more HARQ processes in the frozen bit update period, and the second frozen bit is a frozen bit in the one or more HARQ processes in the frozen bit update period.

30. The apparatus according to claim 28 or 29, wherein the frozen bit update period is a largest time interval in a plurality of time intervals corresponding to the plurality of HARQ processes, or the frozen bit update period is a preset time interval; and
the time interval is a time interval between a physical downlink shared channel in one of the plurality of HARQ processes and an acknowledgement or a negative acknowledgement for the physical downlink shared channel.

31. The apparatus according to claim 28, wherein if the acknowledgement for the physical downlink shared channel is received in N HARQ processes in the frozen bit update period, the first frozen bit is obtained by processing the second frozen bit and the second information bit in the N HARQ processes based on the first function, and N is a positive integer; or
the first frozen bit is obtained by processing the second frozen bit and the second information bit in M HARQ processes based on the first function, the M HARQ processes are any M HARQ processes in the N HARQ processes, and M is a positive integer less than or equal to N.

32. The apparatus according to claim 28, wherein the processing unit is further configured to:
if the acknowledgement for the physical downlink shared channel is received in N HARQ processes in the frozen bit update period, process the second frozen bit and the second information bit in the N HARQ processes based on the first function, to obtain the first frozen bit.

33. The apparatus according to claim 28, wherein the processing unit is further configured to:
process the second frozen bit and the second information bit in M HARQ processes based on the first function, to obtain the first frozen bit, wherein the M HARQ processes are any M HARQ processes in the N HARQ processes, and M is a positive integer less than or equal to N.

34. The apparatus according to claim 28, wherein if the physical uplink shared channel is successfully decoded in at least one HARQ process in the frozen bit update period, the first frozen bit is obtained by processing, based on the first function, the second frozen bit and the second information bit in the at least one HARQ process in which the physical uplink shared channel is successfully decoded.

35. The apparatus according to claim 28, wherein the processing unit is further configured to:
if the physical uplink shared channel is successfully decoded in at least one HARQ process in the frozen bit update period, process, based on the first function, the second frozen bit and the second information bit in the at least one HARQ process in which the physical uplink shared channel is successfully decoded, to obtain the first frozen bit.

36. The apparatus according to any one of claims 24 to 35, wherein the first function or the second function comprises a combination of one or more of hash, truncation, concatenation, sampling, and symmetric encryption.

37. A communication apparatus, comprising a communication unit and a processing unit, wherein
the communication unit is configured to receive a first encoded bit block; and
the processing unit is configured to perform polar decoding on the first encoded bit block based on a first frozen bit, to obtain a first to-be-encoded bit block, wherein the first frozen bit is determined based on at least one of a second information bit, a second frozen bit, or a preset key, the second information bit or the second frozen bit is associated with a second encoded bit block, and the second encoded bit block is a bit block transmitted before the first encoded bit block.

38. The apparatus according to claim 37, wherein the first to-be-encoded bit block comprises at least one of downlink control information, uplink control information, a bit block transmitted on a physical downlink shared channel, a bit block transmitted on a physical uplink shared channel, a bit block transmitted on a physical downlink control channel, and a bit block transmitted on a physical uplink control channel.

39. The apparatus according to claim 38, wherein if the first to-be-encoded bit block comprises first downlink control information, the second information bit is an information bit transmitted on a physical downlink shared channel or a physical uplink shared channel that is associated with second downlink control information before the first downlink control information; or
if the first to-be-encoded bit block comprises first uplink control information, the second information bit is an information bit transmitted on a physical downlink shared channel or a physical uplink shared channel that is associated with second uplink control information before the first uplink control information; or
if the first to-be-encoded bit block comprises an information bit transmitted on a first physical downlink shared channel, the second information bit is an information bit transmitted on a second physical downlink shared channel before the first to-be-encoded bit block; or
if the first to-be-encoded bit block comprises an information bit transmitted on a first physical uplink shared channel, the second information bit is an information bit transmitted on a second physical uplink shared channel before the first to-be-encoded bit block; or
if the first to-be-encoded bit block comprises an information bit transmitted on a first physical downlink control channel, the second information bit is an information bit transmitted on a second physical downlink control channel before the first to-be-encoded bit block; or
if the first to-be-encoded bit block comprises an information bit transmitted on a first physical uplink control channel, the second information bit is an information bit transmitted on a second physical uplink control channel before the first to-be-encoded bit block.

40. The apparatus according to any one of claims 37 to 39, wherein the first frozen bit is obtained by processing the second information bit and the second frozen bit based on a first function; or
the first frozen bit is obtained by processing at least one of the preset key or the second frozen bit based on a second function.

41. A communication apparatus, comprising a processor configured to enable, by using a logic circuit and/or executing instructions, the communication apparatus to perform the method according to any one of claims 1 to 16 or claims 17 to 20.

42. The apparatus according to claim 41, further comprising a memory, wherein the memory is configured to store the instructions.

43. A computer-readable storage medium, wherein the computer-readable storage medium stores instructions, and when the instructions are run on a computer, the computer is enabled to perform the method according to any one of claims 1 to 16 or claims 17 to 20.

44. A chip system, wherein the chip system comprises a processor and an interface, and the processor is configured to execute a computer program, to enable the chip system to implement the method according to any one of claims 1 to 16 or claims 17 to 20.

45. A computer program product, comprising instructions, wherein when the instructions are run on a computer, the computer is enabled to perform the method according to any one of claims 1 to 16 or claims 17 to 20.

46. A communication system, wherein the communication system comprises an apparatus configured to perform the method according to any one of claims 1 to 16, and an apparatus configured to perform the method according to any one of claims 17 to 20.

47. A chip, wherein the chip comprises a processor or a logic circuit, and the processor or the logic circuit is configured to implement the method according to any one of claims 1 to 16 or claims 17 to 20.
